# EUROPEAN PATENT APPLICATION

(11) **EP 4 564 866 A1**
(43) Date of publication of application: **04.06.2025**
(21) Application number: 23851445.9
(22) Date of filing: 29.06.2023
(51) Int. Cl.: H04W 8/08

(54) **COMMUNICATION METHOD AND COMMUNICATION APPARATUS**

(30) Priority: 10.08.2022 CN 202210957217
(71) Applicant: Huawei Technologies Co., Ltd., Shenzhen, Guangdong 518129 (CN)
(72) Inventor: LEI, Zhongding, Shenzhen, Guangdong 518129 (CN)
(74) Representative: Maiwald GmbH
(86) International application number: PCT/CN2023/103959
(87) International publication number: WO 2024/032218

(57) **Abstract**

This application provides a communication method and a communication apparatus. The method may include: A terminal device receives steering of roaming information from a visited mobility management network element, where the steering of roaming information includes a roaming public land mobile network priority list corresponding to one or more network slices, the one or more network slices are a network slice authorized to be used by the terminal device, and the list is used to select a roaming public land mobile network corresponding to the one or more network slices; and the terminal device stores the steering of roaming information after receiving the steering of roaming information. According to the foregoing solution, the terminal device can obtain slice-specific steering of roaming information, to reduce a risk of network slice privacy leakage.

## Description

This application claims priority to Chinese Patent Application No. 202210957217.6, filed with the China National Intellectual Property Administration on August 10, 2022 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

In a roaming scenario, user equipment (user equipment, UE) may initiate a registration procedure to a visited network to establish a network connection. In a registration process, a unified data management function (unified data management, UDM) of a home network may send steering of roaming (steering of roaming, SoR) information to the UE, where the SoR information includes a list of priorities of candidate visited public land mobile networks (public land mobile networks, PLMNs) (denoted as vPLMNs), and the UE may choose to be handed over to an appropriate visited network based on the priority list.

However, the list provided in the SoR information indicates a priority of an entire network (for example, a priority determined based on network performance and a congestion degree of the entire network), and the vPLMN selected for access by the UE based on the priority list provided in the SoR information may not be the most appropriate vPLMN for the UE.

How to provide appropriate SoR information for the UE, so that the UE can select a more appropriate vPLMN to optimize network performance and improve user experience is a problem that needs to be considered currently.

### SUMMARY

This application provides a communication method and a communication apparatus, to enable a terminal device to obtain slice-specific steering of roaming information, to reduce a risk of network slice privacy leakage.

According to a first aspect, a communication method is provided. The method may be performed by a terminal device, or may be performed by a chip or a circuit configured in the terminal device. This is not limited in this application. For convenience, the following uses an example in which the terminal device performs execution for description.

The terminal device receives steering of roaming information from a visited mobility management network element, where the steering of roaming information includes a roaming public land mobile network priority list corresponding to one or more network slices, the one or more network slices are a network slice authorized to be used by the terminal device, and the list is used to select a roaming public land mobile network corresponding to the one or more network slices; and the terminal device stores the steering of roaming information.

Based on the foregoing solution, the terminal device may obtain slice-specific steering of roaming information, so that the terminal device can select a more appropriate roaming public land mobile network to provide a service for the network slice used by the terminal device, thereby optimizing network performance and improving user experience. On the other hand, the steering of roaming information obtained by the terminal device corresponds to the network slice authorized to be used by the terminal device, so that a risk of slice privacy leakage can be reduced, thereby improving service security.

In a possible manner, the method further includes: The terminal device sends a registration request message to the visited mobility management network element; and the terminal device receives a registration accept message from the visited mobility management network element, where the registration accept message includes an allowed network slice, and the network slice authorized to be used by the terminal device is the allowed network slice.

In the foregoing solution, when the terminal device obtains the allowed network slice through the registration accept message, the terminal device may use the allowed network slice as the network slice authorized to be used, to avoid obtaining steering of roaming information corresponding to a network slice unauthorized to be used, so that the risk of slice privacy leakage is reduced. For example, when slice authentication needs to be performed on no candidate network slice to be used by the terminal device, the terminal device may directly obtain the allowed network slice from the registration accept message, and may consider that the allowed network slice is a network slice on which slice authentication does not need to be performed. Therefore, in this case, the terminal device may use the allowed network slice as the authorized network slice, in other words, the terminal device may obtain steering of roaming information corresponding to the allowed network slice.

In a possible manner, before the terminal device receives the steering of roaming information from the visited mobility management network element, the method further includes: The terminal device sends a registration request message to the visited mobility management network element; the terminal device receives a registration accept message from the visited mobility management network element; the terminal device performs slice authentication on one or more candidate network slices to be used; and the terminal device receives a slice authentication result from the visited mobility management network element, where the slice authentication result indicates whether the one or more candidate network slices to be used are successfully authenticated, and the network slice authorized to be used by the terminal device is a successfully authenticated network slice in the one or more candidate network slices to be used.

In the foregoing solution, when the registration accept message does not carry an allowed network slice, the terminal device uses the successfully authenticated network slice as the network slice authorized to be used, to avoid obtaining steering of roaming information corresponding to a network slice unauthorized to be used, so that the risk of slice privacy leakage is reduced. For example, when slice authentication needs to be performed on all candidate network slices to be used by the terminal device, the visited mobility management network element does not include, in the registration accept message, the allowed network slice to be used. In this case, the terminal device triggers a slice authentication procedure to perform authentication on the one or more candidate network slices. The successfully authenticated network slice may be used as the network slice authorized to be used by the terminal device. In other words, the terminal device may obtain steering of roaming information corresponding to the successfully authenticated network slice, but does not obtain steering of roaming information corresponding to a network slice that fails to be authenticated or on which authentication is not performed, so that the risk of slice privacy leakage is reduced.

In a possible manner, before the terminal device receives the steering of roaming information from the visited mobility management network element, the method further includes: The terminal device sends a registration request message to the visited mobility management network element; the terminal device receives a registration accept message from the visited mobility management network element, where the registration accept message includes an identifier of an allowed network slice; the terminal device performs slice authentication on one or more candidate network slices to be used; and the terminal device receives a slice authentication result from the visited mobility management network element, where the slice authentication result indicates whether the one or more candidate network slices to be used are successfully authenticated, and the network slice authorized to be used by the terminal device is a union set of a successfully authenticated network slice in the one or more candidate network slices to be used and the allowed network slice.

In the foregoing solution, the terminal device uses the union set of the allowed network slice carried in the registration accept message and the successfully authenticated network slice as the network slice authorized to be used. In other words, the terminal device may obtain steering of roaming information corresponding to the allowed network slice and the network slice authorized to be used, to reduce the risk of slice privacy leakage. For example, in candidate network slices to be used by the terminal device, when slice authentication does not need to be performed on some network slices, and slice authentication needs to be performed on some other network slices, the terminal device uses, as the network slice authorized to be used, a network slice on which slice authentication (that is, the allowed network slice carried in the registration accept message) does not need to be performed and a network slice on which slice authentication needs to be performed and that is successfully authenticated (where a slice authentication result indicates the network slice that is successfully authenticated). Therefore, the terminal device does not obtain a network slice on which slice authentication needs to be performed but that fails to be authenticated, so that the risk of slice privacy leakage is reduced.

In a possible manner, the method further includes: The terminal device sends a request message to the visited mobility management network element, where the request message is used to request to obtain the steering of roaming information, and the request message includes an identifier of the network slice authorized to be used by the terminal device.

In the foregoing solution, the terminal device may actively obtain slice-specific steering of roaming information corresponding to the network slice authorized to be used, so that an appropriate network can be selected, based on the slice-specific steering of roaming information, for the network slice used by the terminal device, thereby optimizing network performance and improving user experience. In addition, the terminal device can be prevented from obtaining steering of roaming information corresponding to a network slice unauthorized to be used, so that the risk of slice privacy leakage is reduced.

In a possible manner, the request message further includes indication information indicating to request to obtain the slice-specific steering of roaming information.

In the foregoing solution, the terminal device may include the indication information in the request message, so that a data management network element sends the slice-specific steering of roaming information to the terminal device based on the indication information.

In a possible manner, the request message is a message on which security protection is performed by the terminal device, and the security protection includes integrity protection and/or encryption protection performed on the identifier of the network slice authorized to be used by the terminal device.

In the foregoing solution, the terminal device may perform security protection on the request message, to avoid slice privacy leakage, and prevent an attacker from tampering with information, thereby improving service security.

In a possible manner, the request message further includes a security parameter, and the security parameter is an input parameter used when the terminal device performs integrity protection and/or encryption protection on the identifier of the network slice authorized to be used by the terminal device.

In a possible manner, the registration accept message further includes a security parameter, and the security parameter is an input parameter used when the terminal device performs integrity protection and/or encryption protection on the identifier of the network slice authorized to be used by the terminal device.

In a possible manner, that the terminal device sends the request message to the visited mobility management network element includes: The terminal device sends the request message to a data management network element when one or more of the following conditions are met: The terminal device is located in a preset roaming network; the terminal device accesses a network in a preset access mode; or the terminal device receives indication information that is from the visited mobility management network element and that indicates the terminal device to obtain the slice-specific steering of roaming information.

According to a second aspect, a communication method is provided. The method may be performed by a data management network element, or may be performed by a chip or a circuit configured in the data management network element. This is not limited in this application. For convenience, the following uses an example in which the data management network element performs execution for description.

The method includes: The data management network element determines that slice-specific steering of roaming information needs to be sent to a terminal device; and the data management network element sends the steering of roaming information to the terminal device, where the steering of roaming information includes a roaming public land mobile network priority list corresponding to one or more network slices, the one or more network slices are a network slice authorized to be used by the terminal device, and the list is used to select a roaming public land mobile network corresponding to the one or more network slices.

Based on the foregoing solution, the data management network element may send the slice-specific steering of roaming information to the terminal device, so that the terminal device can select a more appropriate roaming public land mobile network to provide a service for the network slice used by the terminal device, thereby optimizing network performance and improving user experience. On the other hand, the steering of roaming information sent by the data management network element to the terminal device corresponds to the network slice authorized to be used by the terminal device, in other words, the network device does not send, to the terminal device, steering of roaming information corresponding to a network slice unauthorized to be used by the terminal device, so that a risk of slice privacy leakage can be reduced, thereby improving service security.

In a possible manner, that the data management network element determines that slice-specific steering of roaming information needs to be sent to a terminal device includes: The data management network element receives a slice authentication result associated with the terminal device from a network slice authentication and authorization function network element, where the slice authentication result indicates whether slice authentication on a candidate network slice to be used by the terminal device succeeds; and the data management network element determines, in response to the slice authentication result, that the steering of roaming information needs to be sent to the terminal device, where the one or more network slices are a network slice on which slice authentication succeeds in the candidate network slice to be used by the terminal device.

In the foregoing solution, the data management network element sends, to the terminal device, steering of roaming information corresponding to the network slice on which slice authentication succeeds, in other words, the data management network element does not send, to the terminal device, steering of roaming information corresponding to a network slice on which slice authentication fails, so that the risk of slice privacy leakage can be reduced, thereby improving service security.

On the other hand, after obtaining slice authentication results of all candidate network slices to be used by the terminal device, the data management network element may send, to the terminal device, steering of roaming information corresponding to all network slices on which slice authentication succeeds, thereby reducing signaling overheads.

In a possible manner, the steering of roaming information includes first steering of roaming information; and that the data management network element determines that slice-specific steering of roaming information needs to be sent to a terminal device includes: The data management network element receives a first slice authentication result associated with the terminal device from a network slice authentication and authorization function network element, where the first slice authentication result indicates that slice authentication on a first network slice succeeds; and the data management network element determines, in response to the first slice authentication result, to send the first steering of roaming information to the terminal device, where the first steering of roaming information includes a roaming public land mobile network priority list corresponding to the first network slice.

In the foregoing solution, the data management network element may send the first steering of roaming information corresponding to the first network slice to the terminal device when obtaining the first slice authentication result corresponding to the first network slice and when the first slice authentication result indicates that authentication on the first network slice succeeds. In other words, when determining that a slice authentication result of a specific network slice is "success", the data management network element may send steering of roaming information corresponding to the network slice to the terminal device, and does not need to wait until the data management network element obtains slice authentication results of all candidate network slices to be used by the terminal device, to send the slice-specific steering of roaming information to the terminal device, thereby improving communication efficiency and enhancing service performance of the terminal device.

In a possible manner, the method further includes: The data management network element sends a subscription message to the network slice authentication and authorization function network element, where the subscription message is used to subscribe to the slice authentication result of the candidate network slice to be used by the terminal device; or the data management network element sends an authentication result obtaining request message to the network slice authentication function network element, where the authentication result obtaining request message is used to request to obtain the slice authentication result of the candidate network slice to be used by the terminal device.

In a possible manner, that the data management network element determines that slice-specific steering of roaming information needs to be sent to a terminal device includes: The data management network element receives a request message from the terminal device or a visited mobility management network element serving the terminal device, where the request message is used to request to obtain the steering of roaming information, and the request message includes an identifier of the network slice authorized to be used by the terminal device; and the data management network element determines, in response to the request message, to send, to the terminal device, the steering of roaming information corresponding to the network slice authorized to be used by the terminal device.

In the foregoing solution, the data management network element receives the identifier that is of the network slice authorized to be used by the terminal device and that is carried in the request message used to request to obtain the slice-specific steering of roaming information. In this case, the data management network element may directly send, to the terminal device, the steering of roaming information corresponding to the network slice, but does not send, to the terminal device, steering of roaming information corresponding to another network slice unauthorized to be used, so that the risk of slice privacy leakage is reduced, thereby improving service security.

In a possible manner, that the data management network element determines that slice-specific steering of roaming information needs to be sent to a terminal device includes: The data management network element determines, when the identifier of the one or more network slices belongs to a slice list preconfigured by the data management network element, that the steering of roaming information corresponding to the one or more network slices needs to be sent to the terminal device.

In the foregoing solution, the data management network element may preconfigure a slice list, and the data management network element may send, to the terminal device, steering of roaming information corresponding to a network slice in the slice list, but does not send, to the terminal device, steering of roaming information corresponding to a network slice outside the slice list, so that the risk of slice privacy leakage can be reduced, thereby improving service security.

In a possible manner, before the data management network element receives the request message from the terminal device, the method further includes: The data management network element sends indication information to the terminal device, where the indication information indicates the terminal device to obtain the slice-specific steering of roaming information.

In a possible manner, the method further includes: The data management network element sends a security parameter to the terminal device, where the security parameter is an input parameter used when the terminal device performs integrity protection and/or encryption protection on the identifier of the network slice authorized to be used by the terminal device.

In the foregoing solution, the data management network element may send, to the terminal device, the security parameter used to perform security protection on the identifier of the network slice authorized to be used, to avoid slice privacy leakage, and prevent an attacker from tampering with information, thereby improving service security.

According to a third aspect, a communication method is provided. The method may be performed by a visited mobility management network element, or may be performed by a chip or a circuit configured in the visited mobility management network element. This is not limited in this application. For convenience, the following uses an example in which the visited mobility management network element performs execution for description.

The method includes: The visited mobility management network element sends a request message to a data management network element, where the request message is used to request to obtain steering of roaming information, the request message includes an identifier of one or more network slices, and the one or more network slices are a network slice authorized to be used by a terminal device; the visited mobility management network element receives a response message from the data management network element, where the response message includes the steering of roaming information, the steering of roaming information includes a roaming public land mobile network priority list corresponding to the one or more network slices, and the list is used to select a roaming public land mobile network corresponding to the one or more network slices; and the visited mobility management network element sends the steering of roaming information to the terminal device.

Based on the foregoing solution, the visited mobility management network element may obtain and send the slice-specific steering of roaming information to the terminal device, so that the terminal device can select a more appropriate roaming public land mobile network to provide a service for the network slice used by the terminal device, thereby optimizing network performance and improving user experience. On the other hand, the steering of roaming information sent by the visited mobility management network element to the terminal device corresponds to the network slice authorized to be used by the terminal device, so that a risk of slice privacy leakage can be reduced, thereby improving service security.

In a possible manner, the method further includes: The visited mobility management network element receives a registration request message from the terminal device; and the visited mobility management network element sends a registration accept message to the terminal device in response to the registration request message, where the registration accept message includes an allowed network slice, and the network slice authorized to be used by the terminal device is the allowed network slice.

For example, when a candidate network slice to be used by the terminal device includes a network slice on which slice authentication does not need to be performed, the visited mobility management network element includes the allowed network slice in the registration accept message, and the allowed network slice includes, for example, the network slice on which slice authentication does not need to be performed. In this case, the visited mobility management network element may obtain and send, to the terminal device, the network slice on which slice authentication does not need to be performed, to prevent the terminal device from obtaining steering of roaming information corresponding to a network slice unauthorized to be used, so that a risk of slice privacy leakage is reduced.

In a possible manner, before the visited mobility management network element sends the steering of roaming information to the terminal device, the method further includes: The visited mobility management network element receives a registration request message from the terminal device; the visited mobility management network element sends a registration accept message to the terminal device in response to the registration request message; the visited mobility management network element triggers the terminal device to perform slice authentication on one or more candidate network slices to be used; the visited mobility management network element receives a slice authentication result from a network slice authentication and authorization function network element, where the slice authentication result indicates whether the one or more candidate network slices to be used are successfully authenticated, and the network slice authorized to be used by the terminal device is a successfully authenticated network slice in the one or more candidate network slices to be used; and the visited mobility management network element sends the slice authentication result to the terminal device.

In the foregoing solution, the visited mobility management network element obtains and sends steering of roaming information corresponding to the successfully authenticated network slice, to avoid obtaining and sending steering of roaming information corresponding to a network slice unauthorized to the terminal device, so that the risk of slice privacy leakage is reduced, thereby improving service security.

In a possible manner, before the visited mobility management network element sends the steering of roaming information to the terminal device, the method further includes: The visited mobility management network element receives a registration request message from the terminal device; the visited mobility management network element sends a registration accept message to the terminal device in response to the registration request message, where the registration accept message includes an identifier of an allowed network slice; the visited mobility management network element triggers the terminal device to perform slice authentication on one or more candidate network slices to be used; the visited mobility management network element receives a slice authentication result from a network slice authentication and authorization function network element, where the slice authentication result indicates whether the one or more candidate network slices to be used are successfully authenticated, and the network slice authorized to be used by the terminal device is a union set of a successfully authenticated network slice in the one or more candidate network slices to be used and the allowed network slice; and the visited mobility management network element sends the slice authentication result to the terminal device.

In the foregoing solution, the visited mobility management network element obtains and sends steering of roaming information corresponding to the allowed network slice and the successfully authenticated network slice, to avoid obtaining and sending steering of roaming information corresponding to a network slice unauthorized to the terminal device (for example, a network slice that fails to be authenticated), so that the risk of slice privacy leakage is reduced, thereby improving service security.

In a possible manner, the request message further includes indication information indicating to request to obtain the slice-specific steering of roaming information.

In a possible manner, that the visited mobility management network element sends a request message to a data management network element includes: The visited mobility management network element sends the request message to the data management network element when one or more of the following conditions are met: The terminal device is located in a preset roaming network; or the terminal device accesses a network in a preset access mode.

According to a fourth aspect, a communication apparatus is provided. The apparatus includes: a transceiver module, configured to receive steering of roaming information from a visited mobility management network element, where the steering of roaming information includes a roaming public land mobile network priority list corresponding to one or more network slices, the one or more network slices are a network slice authorized to be used by the apparatus, and the list is used to select a roaming public land mobile network corresponding to the one or more network slices; and a processing module, configured to store the steering of roaming information.

In a possible manner, the transceiver module is further configured to send a registration request message to the visited mobility management network element; and receive a registration accept message from the visited mobility management network element, where the registration accept message includes an allowed network slice, and the network slice authorized to be used is the allowed network slice.

In a possible manner, the transceiver module is further configured to send a registration request message to the visited mobility management network element; and receive a registration accept message from the visited mobility management network element; the processing module is further configured to perform slice authentication on one or more candidate network slices to be used; and the transceiver module is further configured to receive a slice authentication result from the visited mobility management network element, where the slice authentication result indicates whether the one or more candidate network slices to be used are successfully authenticated, and the network slice authorized to be used is a successfully authenticated network slice in the one or more candidate network slices to be used.

In a possible manner, the transceiver module is further configured to send a registration request message to the visited mobility management network element; and receive a registration accept message from the visited mobility management network element, where the registration accept message includes an identifier of an allowed network slice; the processing module is further configured to perform slice authentication on one or more candidate network slices to be used; and the transceiver module is further configured to receive a slice authentication result from the visited mobility management network element, where the slice authentication result indicates whether the one or more candidate network slices to be used are successfully authenticated, and the network slice authorized to be used is a union set of a successfully authenticated network slice in the one or more candidate network slices to be used and the allowed network slice.

In a possible manner, the transceiver module is further configured to send a request message to the visited mobility management network element, where the request message is used to request to obtain the steering of roaming information, and the request message includes an identifier of the network slice authorized to be used.

In a possible manner, the request message further includes indication information indicating to request to obtain the slice-specific steering of roaming information.

In a possible manner, the request message is a message on which security protection is performed, and the security protection includes integrity protection and/or encryption protection performed on the identifier of the network slice authorized to be used.

In a possible manner, the request message further includes a security parameter, and the security parameter is an input parameter used when integrity protection and/or encryption protection are/is performed on the identifier of the network slice authorized to be used.

In a possible manner, the registration accept message further includes a security parameter, and the security parameter is an input parameter used when integrity protection and/or encryption protection are/is performed on the identifier of the network slice authorized to be used.

In a possible manner, the transceiver module is specifically configured to send the request message to the data management network element when one or more of the following conditions are met: The apparatus is located in a preset roaming network; the apparatus accesses a network in a preset access mode; or the transceiver module receives indication information that is from the visited mobility management network element and that indicates to obtain the slice-specific steering of roaming information.

According to a fifth aspect, a communication apparatus is provided. The apparatus includes: a processing module, configured to determine that slice-specific steering of roaming information needs to be sent to a terminal device; and a transceiver module, configured to send the steering of roaming information to the terminal device, where the steering of roaming information includes a roaming public land mobile network priority list corresponding to one or more network slices, the one or more network slices are a network slice authorized to be used by the terminal device, and the list is used to select a roaming public land mobile network corresponding to the one or more network slices.

In a possible manner, the transceiver module is specifically configured to receive a slice authentication result associated with the terminal device from a network slice authentication and authorization function network element, where the slice authentication result indicates whether slice authentication on a candidate network slice to be used by the terminal device succeeds; and the processing module is specifically configured to determine that the steering of roaming information needs to be sent to the terminal device, where the one or more network slices are a network slice on which slice authentication succeeds in the candidate network slice to be used by the terminal device.

In a possible manner, the steering of roaming information includes first steering of roaming information; the transceiver module is specifically configured to receive a first slice authentication result associated with the terminal device from a network slice authentication and authorization function network element, where the first slice authentication result indicates that slice authentication on a first network slice succeeds; and the processing module is specifically configured to determine to send the first steering of roaming information to the terminal device, where the first steering of roaming information includes a roaming public land mobile network priority list corresponding to the first network slice.

In a possible manner, the transceiver module is further configured to: send a subscription message to the network slice authentication and authorization function network element, where the subscription message is used to subscribe to the slice authentication result of the candidate network slice to be used by the terminal device; or send an authentication result obtaining request message to the network slice authentication and authorization function network element, where the authentication result obtaining request message is used to request to obtain the slice authentication result of the candidate network slice to be used by the terminal device.

In a possible manner, the transceiver module is specifically configured to receive a request message from the terminal device or a visited mobility management network element serving the terminal device, where the request message is used to request to obtain the steering of roaming information, and the request message includes an identifier of the network slice authorized to be used by the terminal device; and the processing module is specifically configured to determine to send, to the terminal device, the steering of roaming information corresponding to the network slice authorized to be used by the terminal device.

In a possible manner, the processing module is specifically configured to determine, when the identifier of the one or more network slices belongs to a slice list preconfigured by the data management network element, that the steering of roaming information corresponding to the one or more network slices needs to be sent to the terminal device.

In a possible manner, the transceiver module is further configured to send indication information to the terminal device, where the indication information indicates the terminal device to obtain the slice-specific steering of roaming information.

In a possible manner, the transceiver module is further configured to send a security parameter to the terminal device, where the security parameter is an input parameter used when the terminal device performs integrity protection and/or encryption protection on the identifier of the network slice authorized to be used by the terminal device.

According to a sixth aspect, a communication apparatus is provided. The apparatus includes a transceiver module, configured to: send a request message to a data management network element, where the request message is used to request to obtain steering of roaming information, the request message includes an identifier of one or more network slices, and the one or more network slices are a network slice authorized to be used by a terminal device; receive a response message from the data management network element, where the response message includes the steering of roaming information, the steering of roaming information includes a roaming public land mobile network priority list corresponding to the one or more network slices, and the list is used to select a roaming public land mobile network corresponding to the one or more network slices; and send the steering of roaming information to the terminal device.

In a possible manner, the transceiver module is further configured to: receive a registration request message from the terminal device; and send a registration accept message to the terminal device, where the registration accept message includes an allowed network slice, and the network slice authorized to be used by the terminal device is the allowed network slice.

In a possible manner, the transceiver module is further configured to: receive a registration request message from the terminal device; and send a registration accept message to the terminal device; the processing module is further configured to trigger the terminal device to perform slice authentication on one or more candidate network slices to be used; and the transceiver module is further configured to: receive a slice authentication result from a network slice authentication and authorization function network element, where the slice authentication result indicates whether the one or more candidate network slices to be used are successfully authenticated, and the network slice authorized to be used by the terminal device is a successfully authenticated network slice in the one or more candidate network slices to be used; and send the slice authentication result to the terminal device.

In a possible manner, the transceiver module is further configured to: receive a registration request message from the terminal device; and send a registration accept message to the terminal device, where the registration accept message includes an identifier of an allowed network slice; the processing module is further configured to trigger the terminal device to perform slice authentication on one or more candidate network slices to be used; the transceiver module is further configured to receive a slice authentication result from a network slice authentication and authorization function network element, where the slice authentication result indicates whether the one or more candidate network slices to be used are successfully authenticated, and the network slice authorized to be used by the terminal device is a union set of a successfully authenticated network slice in the one or more candidate network slices to be used and the allowed network slice; and the transceiver module is further configured to send the slice authentication result to the terminal device.

In a possible manner, the request message further includes indication information indicating to request to obtain the slice-specific steering of roaming information.

In a possible manner, the transceiver module is specifically configured to send the request message to the data management network element when one or more of the following conditions are met: The terminal device is located in a preset roaming network; or the terminal device accesses a network in a preset access mode.

According to a seventh aspect, a communication apparatus is provided. The apparatus is configured to perform any one of the methods according to the first aspect to the sixth aspect. Specifically, the apparatus may include units and/or modules configured to perform the methods according to the first aspect to the sixth aspect, for example, a processing module and/or a transceiver module (also be referred to as a communication module).

In an implementation, the apparatus is a terminal device, or a chip, a chip system, or a circuit in the terminal device. When the apparatus is the chip, the chip system, or the circuit in the terminal device, the transceiver module may be an input/output interface, an interface circuit, an output circuit, an input circuit, a pin, a related circuit, or the like on the chip, the chip system, or the circuit; and the processing module may be a processor, a processing circuit, a logic circuit, or the like. In this case, the apparatus may include the unit and/or the module, for example, a processing unit and/or a communication unit, configured to perform the method according to the first aspect.

In another possible case, the apparatus is a data management network element, or a chip, a chip system, or a circuit in the data management network element. In this case, the apparatus may include the unit and/or the module, for example, a processing module and/or a transceiver module, configured to perform the method according to the second aspect.

In still another possible case, the apparatus is a visited mobility management network element, or a chip, a chip system, or a circuit in the visited mobility management network element. In this case, the apparatus may include the unit and/or the module, for example, a processing module and/or a transceiver module, configured to perform the method according to the third aspect.

Optionally, the transceiver module may be a transceiver circuit. Optionally, the input/output interface may be an input/output circuit.

According to an eighth aspect, a communication apparatus is provided. The apparatus includes: a memory, configured to store a program; and a processor, configured to execute the program stored in the memory. When the program stored in the memory is executed, the processor is configured to perform any one of the methods according to the first aspect to the sixth aspect.

According to a ninth aspect, this application provides a processor, configured to perform the methods according to the foregoing aspects. In a process of performing these methods, a process of sending the foregoing information and a process of obtaining/receiving the foregoing information in the foregoing methods may be understood as a process of outputting the foregoing information by the processor and a process of receiving the foregoing inputted information by the processor. When outputting the information, the processor outputs the information to a transceiver, so that the transceiver transmits the information. After the information is outputted by the processor, other processing may further need to be performed on the information before the information arrives at the transceiver. Similarly, when the processor receives the inputted information, the transceiver obtains/receives the information, and inputs the information into the processor. Further, after the transceiver receives the information, other processing may need to be performed on the information before the information is inputted into the processor.

Based on the foregoing principle, for example, receiving the request message in the foregoing methods may be understood as receiving the inputted information by the processor.

Unless otherwise specified, or if operations such as transmitting, sending, and obtaining/receiving related to the processor do not contradict an actual function or internal logic of the operations in related descriptions, all the operations may be more generally understood as operations such as outputting, receiving, and inputting of the processor, instead of operations of transmitting, sending, and receiving directly performed by a radio frequency circuit and an antenna.

In an implementation process, the processor may be a processor specially configured to perform these methods, or a processor, for example, a general-purpose processor, that executes computer instructions in the memory to perform these methods. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this embodiment of this application.

According to a tenth aspect, a computer-readable storage medium is provided. The computer-readable medium stores program code to be executed by a device, and the program code is configured to perform any one of the methods according to the first aspect to the sixth aspect.

According to an eleventh aspect, a computer program product including instructions is provided. When the computer program product runs on a computer, the computer is enabled to perform any one of the methods according to the first aspect to the sixth aspect.

According to a twelfth aspect, a chip is provided. The chip includes a processor and a communication interface. The processor reads, through the communication interface, instructions stored in a memory, to perform any one of the methods according to the first aspect to the sixth aspect.

Optionally, in an implementation, the chip may further include the memory. The memory stores the instructions, and the processor is configured to execute the instructions stored in the memory. When the instructions are executed, the processor is configured to perform any one of the methods according to the first aspect to the sixth aspect.

According to a thirteenth aspect, a communication system is provided, including the data management network element and the visited session management network element.

Optionally, the communication system may further include the foregoing terminal device.

### BRIEF DESCRIPTION OF DRAWINGS

FIG. 1 and FIG. 2 are each a diagram of a network architecture applicable to embodiments of this application;
FIG. 3 is a schematic flowchart of a method 300 according to an embodiment of this application;
FIG. 4 is a diagram of an architecture of a roaming network;
FIG. 5 is a schematic flowchart of a method 500 according to an embodiment of this application;
FIG. 6 is a schematic flowchart of a method 600 according to an embodiment of this application;
FIG. 7 is a schematic flowchart of a method 700 according to an embodiment of this application;
FIG. 8 is a schematic flowchart of a method 800 according to an embodiment of this application;
FIG. 9 is a schematic flowchart of a method 900 according to an embodiment of this application;
FIG. 10 is a schematic flowchart of a method 1000 according to an embodiment of this application;
FIG. 11 is a block diagram of a communication apparatus according to an embodiment of this application;
FIG. 12 is a block diagram of a communication apparatus according to another embodiment of this application; and
FIG. 13 is a block diagram of a communication apparatus according to still another embodiment of this application.

### DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. In the descriptions of this application, unless otherwise specified, "a plurality of" means two or more than two.

In embodiments of this application, unless otherwise stated or there is a logic conflict, terms and/or descriptions in different embodiments are consistent and may be mutually referenced, and technical features in different embodiments may be combined based on an internal logical relationship thereof, to form new embodiments.

It may be understood that various numerals used in this application are merely differentiated for ease of description, but are not used to limit the scope of this application. The sequence numbers of the foregoing processes do not mean execution sequences, and the execution sequences of the processes should be determined based on functions and internal logic of the processes.

In the specification, the claims, and the accompanying drawings of this application, the terms "first", "second", "third", "fourth", and various other ordinal number terms (if existent) are intended to distinguish between similar objects but do not necessarily indicate a specific order or sequence. It should be understood that the data termed in such a way are interchangeable in proper circumstances so that embodiments described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

In a communication system, a part operated by an operator may be referred to as a public land mobile network (public land mobile network, PLMN) (which may also be referred to as an operator network or the like). The PLMN is a network established and operated by a government or an operator approved by the government to provide a land mobile communication service for the public, and is mainly a public network in which a mobile network operator (mobile network operator, MNO) provides a mobile broadband access service for a user. The PLMN described in this application may be specifically a network compliant with a requirement of the standard of the 3rd generation partnership project (3rd generation partnership project, 3GPP), which is briefly referred to as a 3GPP network. The 3GPP network usually includes but is not limited to a 5th generation (5th generation, 5G) mobile communication network (briefly referred to as 5G network), a 4th generation (4th generation, 4G) mobile communication network (briefly referred to as 4G network), and another future communication system such as a 6G network. For ease of description, the PLMN or the 5G network is used as an example for description in embodiments of this application.

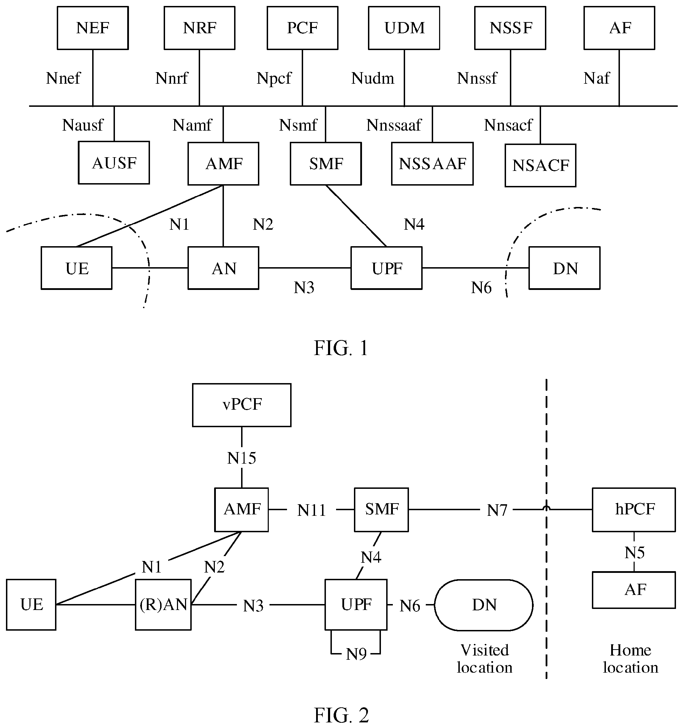

FIG. 1 is a diagram of a network architecture according to an embodiment of this application. For convenience, a 5G network architecture based on a service-based architecture in a non-roaming scenario is used as an example for description. The network architecture may include three parts, which are respectively a terminal device (which may also be referred to as user equipment (user equipment, UE)) part, a PLMN, and a data network (data network, DN). The PLMN may include but is not limited to: a network exposure function (network exposure function, NEF), a network function repository function (network function repository function, NRF), a policy control function (policy control function, PCF), a unified data management function (unified data management, UDM), a network slice selection function (network slice selection function, NSSF), an authentication server function (authentication server function, AUSF), an access and mobility management function (access and mobility management function, AMF) network element, a session management function (session management function, SMF), a user plane function (user plane function, UPF), an application function (application function, AF), a network slice admission control function (Network Slice Admission Control Function, NSACF), a network slice-specific authentication and authorization function (Network Slice-Specific Authentication and Authorization Function, NSSAAF), a (radio) access network ((radio) access network, (R)AN), and the like. In the PLMN, a part except the (radio) access network part may be referred to as a core network (core network, CN) part. For example, the following describes each network or function and a terminal device that uses the network as an example.

### 1. Terminal device

In embodiments of this application, the terminal device may be user equipment (user equipment, UE), a mobile station (mobile station, MS), a mobile terminal (mobile terminal, MT), an access terminal, a subscriber unit, a subscriber station, a mobile station, a mobile console, a remote station, a remote terminal, a mobile device, a user terminal, a terminal, a wireless communication device, a user agent, a user apparatus, or the like.

The terminal device may be a device that provides voice/data connectivity for a user, for example, a handheld device or a vehicle-mounted device that has a wireless connection function. Examples of the terminal device are as follows: a mobile phone (mobile phone), a tablet computer, a notebook computer, a handheld computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving or autopilot (self-driving or autopilot), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a future 5G network, a terminal device in a future evolved public land mobile network (public land mobile network, PLMN), and the like. This is not limited in embodiments of this application.

By way of example but not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, the wearable intelligent device includes full-featured and large-sized devices that can implement complete or partial functions without depending on smartphones, such as smart watches or smart glasses, and devices that are dedicated to only a specific type of application function and need to work with other devices such as smartphones, such as various smart bands or smart jewelry for monitoring physical signs. In addition, in embodiments of this application, the terminal device may alternatively be a terminal device in an internet of things (internet of things, IoT) system.

### 2. Access network AN

The access network is a subnet of the PLMN, and is an implementation system between a service node (or a network function) in the PLMN and a terminal device 110. To access the PLMN, the terminal device 110 first passes through a (R)AN 150, and then is connected to the service node in the PLMN through the (R)AN 150. The (R)AN 150 in embodiments of this application may refer to the access network, or may refer to an access network device. This is not distinguished herein. The access network device is a device that provides a wireless communication function for the terminal device 110, and may also be referred to as an access device, a (R)AN device, a network device, or the like. The access network device includes but is not limited to a next generation node base station (next generation node base station, gNB) in a 5G system, an evolved NodeB (evolved NodeB, eNB) in an LTE system, a radio network controller (radio network controller, RNC), a NodeB (NodeB, NB), a base station controller (base station controller, BSC), a base transceiver station (base transceiver station, BTS), a home NodeB (home evolved NodeB, or home NodeB, HNB), a baseband unit (baseband unit, BBU), a transmission and reception point (transmission and reception point, TRP), a transmitting point (transmitting point, TP), a small base station device (pico), a mobile switching center, or a network device in a future network. It may be understood that a specific type of the access network device is not limited in this application. In systems using different radio access technologies, devices with functions of the access network device may have different names.

Optionally, in some deployment of the access device, the access device may include a central unit (central unit, CU), a distributed unit (distributed unit, DU), and the like. In some other deployment of the access device, the CU may be further split into a CU-control plane (control plane, CP), a CU-user plane (user plane, UP), and the like. In still some other deployment of the access device, the access device may alternatively be in an open radio access network (open radio access network, ORAN) architecture or the like. A specific deployment manner of the access device is not limited in this application.

### 3. Access and mobility management function (AMF) network element

The access and mobility management function network element may be used for mobility management, access management, and the like, and may be configured to implement another function other than session management in a mobility management entity (mobility management entity, MME) function, for example, a function such as legal detection or access authorization. In addition, the access and mobility management function network element is further configured to transmit a user policy between the terminal device and a policy control function (policy control function, PCF) network element. In embodiments of this application, the access and mobility management function network element may be configured to implement a function of an access and mobility management network element.

### 4. Session management function (SMF) network element

The session management function network element may be used for session management, allocation and management of an internet protocol (internet protocol, IP) address of the terminal device, and selection and management of a user plane function (user plane function, UPF) network element, used as a termination point of a policy control and charging functional interface, and used for downlink data notification, and the like. In embodiments of this application, the session management function network element may be configured to implement a function of a session management network element.

### 5. User plane function (UPF) network element

The user plane function network element may be used for packet routing and forwarding, processing of a quality of service (quality of service, QoS) parameter of user plane data, or the like. User data may be accessed to a data network (data network, DN) through this network element. In embodiments of this application, the user plane function network element may be configured to implement a function of a user plane network element. For example, when a session is established on different user plane function network elements, service experience of the terminal device is also different. Therefore, the session management function network element needs to select an appropriate user plane function network element for a session of the terminal device.

### 6. Policy control function (PCF) network element

The policy control network element is a unified policy framework used to guide network behavior, provides policy rule information and the like for a control plane function network element (for example, the access and mobility management function network element or the session management function network element), and is mainly responsible for policy control functions such as session-level or service flow-level charging, QoS bandwidth guarantee and mobility management, and terminal device policy decision-making. The policy control network element may have both a capability of an access and mobility management policy control network element (policy control function for access and mobility control, AM PCF) and a capability of a session management policy control network element (PCF for session management, SM PCF). Logically, the access and mobility management policy control network element and the session management policy control network element may be understood as different network elements that respectively have different capabilities. In an actual deployment scenario, the access and mobility management policy control network element and the session management policy control network element may be a same policy control network element entity, that is, may be separately deployed, or may be two different policy control network element entities, that is, may be jointly deployed.

For example, the access and mobility management policy control network element is directly connected to the access and mobility management function network element, and the access and mobility management policy control network element provides a mobility-related policy and an access selection-related policy of the terminal device for the access and mobility management network element management function network element. The mobility policy includes, for example, service area restriction management, radio access technology frequency selection priority (radio access technology frequency selection priority, RFSP) index (index) management, and session management function network element selection management. The access selection-related policy of the terminal device includes an access network discovery and selection policy (access network discovery and selection policy, ANDSP) and a route selection policy (route selection policy, URSP) of the terminal device. For another example, the session management policy control network element is directly connected to the session management function network element, and provides a protocol data unit (protocol data unit, PDU) session-related policy for the session management function network element. The PDU session-related policy includes, for example, a gating control policy, a charging policy, a QoS control policy, and a usage monitoring control policy.

It should be understood that in a roaming scenario, a visited policy control network element may logically include a visited access and mobility management policy control network element and a visited session management policy control network element, and a home policy control network may logically include a home access and mobility management policy control network element and a home session management policy control network element. During actual deployment, the visited access and mobility management policy control network element and the visited session management policy control network element may be a same visited policy control network element entity, or may be two different visited policy control network element entities. Similarly, during actual deployment, the home access and mobility management policy control network element and the home session management policy control network element may be a same home policy control network element entity, or may be two different home policy control network element entities.

### 7. Network capability exposure function (NEF) network element

The network capability exposure function network element is configured to expose, to the outside, service and network capability information (such as a terminal location) and the like provided by a 3GPP network function.

### 8. Unified data management (UDM) network element

The unified data management network element may be used for unified data management, and supports authentication trust status processing, user identity processing, access authorization, registration and mobility management, subscription management, short message management, and the like in a 3GPP authentication and key agreement mechanism.

### 9. Network slice selection function (NSSF) network element

The network slice selection function network element is a control plane network function provided by the PLMN, and is responsible for determining a network slice instance, selecting an AMF network function, and the like.

### 12. Authentication server function (AUSF) network element

The authentication server function network element is a control plane function provided by an operator, and is usually used for primary authentication, to be specific, authentication between the terminal device (a subscriber) and the PLMN.

### 13. Application function (AF) network element

The application function network element mainly interacts with another NF in the CN to provide a corresponding service, for example, providing visiting network (visiting PLMN or VPLMN) selection information of roaming UE, guiding routing of a data flow, and accessing an NEF. The AF may be deployed inside the PLMN by an operator or outside a network of the operator.

### 14. Network slice admission control function (NSACF) network element

The network slice admission control function network element is a network function used by the PLMN to monitor and control a quantity of terminal devices registered with a network slice. Usually, a maximum quantity of terminal devices that can be served in each network slice monitored and controlled by the PLMN is configured on the NSACF.

### 15. Network slice-specific authentication and authorization function (NSSAAF) network element

The network slice-specific authentication and authorization function network element is a control plane network function provided by the PLMN, and is configured to support slice authentication performed between a terminal and the DN.

### 10. Data network (DN)

The data network may also be referred to as a packet data network (packet data network, PDN), and may be usually deployed outside the PLMN, for example, a third-party network (certainly, the DN may alternatively be deployed in the PLMN, and this is not limited herein). For example, the PLMN may access a plurality of data networks DNs 120, and a plurality of services may be deployed in the data networks DNs 120, to provide services such as a data service and/or a voice service for the terminal device 110. For example, the data network DN 120 may be a private network of a specific smart factory, a sensor installed in a workshop of the smart factory may be the terminal device 110, a control server of the sensor is deployed in the data network DN 120, and the control server may provide a service for the sensor. The sensor may communicate with the control server, to obtain instructions of the control server, transmit collected sensor data to the control server according to the instructions, and the like. For another example, the data network DN 120 may be an internal office network of a specific company, a mobile phone or a computer of an employee of the company may be the terminal device 110, and the mobile phone or the computer of the employee may access information, data resources, and the like on the internal office network of the company. The terminal device 110 may establish a connection to the PLMN through an interface (for example, an N1 interface in FIG. 1) provided by the PLMN, to use the services such as the data service and/or the voice service provided by the PLMN. The terminal device 110 may further access the data network DN 120 through the PLMN, to use an operator service deployed in the data network DN 120 and/or a service provided by a third party. The third party may be a service provider other than the PLMN and the terminal device 110, and may provide another service such as a data service and/or a voice service for the terminal device 110. A specific representation form of the third party may be specifically determined based on an actual application scenario, and is not limited herein. It should be noted that FIG. 1 shows only a user plane interface N6 between a DN and a UPF, but does not show a control plane interface between the DN and another NF (for example, an NSSAAF). This is further described below, and is not limited herein.

The network functions in the PLMN shown in FIG. 1 may further include a unified data repository (unified data repository, UDR) and the like (not shown in the figure). Another network function included in the PLMN is not limited in this embodiment of this application.

In FIG. 1, Nnef, Nnrf, Npcf, Nudm, Nnssf, Nausf, Namf, Nsmf, Nnssaaf, Nnsacf, Naf, N1, N2, N3, N4, and N6 are interface sequence numbers. For example, for meanings of the interface sequence numbers, refer to meanings defined in the 3GPP standard protocol. The meanings of the interface sequence numbers are not limited in this application. It should be noted that in FIG. 1, an example in which the terminal device 110 is UE is merely used for description. Names of interfaces between the network functions in FIG. 1 are also merely examples. During specific implementation, the names of the interfaces in the system architecture may be other names. This is not limited in this application.

The diagram of the network architecture shown in FIG. 1 may be understood as a service-based architecture. In the service-based architecture, the PLMN may orderly combine some or all network functions as required based on a specific scenario requirement, to implement customization of a network capability and a service, to deploy dedicated networks for different services, that is, implement 5G network slicing (network slicing). With a network slicing technology, an operator can respond to customer requirements more flexibly and quickly and support flexible allocation of network resources.

It should be understood that the foregoing network architecture applied to embodiments of this application is merely an example of a network architecture described from a perspective of a conventional point-to-point architecture and a servitization architecture, and a network architecture applicable to embodiments of this application is not limited thereto. Any network architecture that can implement functions of the foregoing network elements is applicable to embodiments of this application.

It should be understood that names of the interfaces between the network elements in FIG. 1 are merely an example, and the interfaces may have other names during specific implementation. This is not specifically limited in this application. In addition, names of messages (or signaling) transmitted between the foregoing network elements are also merely an example, and do not constitute any limitation on functions of the messages.

It may be understood that the foregoing network elements or functions may be network elements in a hardware device, software functions running on dedicated hardware, or virtualized functions instantiated on a platform (for example, a cloud platform). Optionally, the foregoing network elements or functions may be implemented by one device, may be jointly implemented by a plurality of devices, or may be implemented by one functional module in one device. This is not specifically limited in embodiments of this application.

It should be further understood that, in the communication system shown in FIG. 1, the functions of the constituent network elements are merely examples. When the constituent network elements are applied to embodiments of this application, not all the functions are necessary.

In addition, names of the network elements (such as the PCF and the AMF) included in FIG. 1 are merely names, and the names do not constitute a limitation on the functions of the network elements. In a 5G network and another future network, the foregoing network elements may alternatively have other names. This is not specifically limited in embodiments of this application. For example, in a 6G network, some or all of the foregoing network elements may still use terms in 5G, or may have other names. A general description is provided herein. Details are not described again below.

It should be further noted that communication between the network elements implementing the control plane functions in FIG. 1 is described by using a non-service-oriented interface as an example, but does not constitute a limitation on the protection scope of embodiments of this application. A person skilled in the art may understand that the network elements implementing the control plane functions in FIG. 1 may alternatively communicate with each other through a service-oriented interface. For example, an external service-oriented interface provided by the AMF may be Namf; a service-oriented interface provided by the SMF may be Nsmf; a service-oriented interface provided by the AF may be Naf; and an external service-oriented interface provided by the PCF may be Npcf.

FIG. 2 is a diagram of a roaming architecture applicable to this application. In the roaming architecture, UE is a roaming user, and subscription information thereof is in a network in a home location (also referred to as a home network). Currently, the UE accesses a DN in a visited location by using a RAN and a UPF in a network in the visited location (also referred to as a roaming network or a visited network). Both an AMF and an SMF are located in the visited location (for example, a visited province). A PCF (home-PCF, h-PCF) in the home location (for example, a home province) delivers a corresponding policy rule to the SMF in the visited location by using an N7 interface, and may provide a service for the UE based on the policy rule. The visited AMF may obtain a corresponding access and mobility management policy by using a visited PCF (visited-PCF, v-PCF), and provide a service for the UE based on the access and mobility management policy. It should be noted that, during actual deployment, the h-PCF herein may be an independently deployed home SM PCF, or may be a home SM PCF and a home AM PCF that are deployed in an integrated manner. The v-PCF herein may be an independently deployed visited AM PCF, or may be a visited SM PCF and a visited AM PCF that are deployed in an integrated manner.

For ease of understanding the solutions provided in embodiments of this application, the following first describes a concept of network slicing by using an example.

The network slicing (which may also be briefly referred to as slicing) may be understood as dividing a physical network of an operator into a plurality of virtual end-to-end networks, and virtual networks (including devices, access networks, transport networks, and core networks in the networks) are logically independent of each other, to prevent a fault in any virtual network from affecting another virtual network. To satisfy diversified requirements and isolation between slices, independent management and operation and maintenance of services need to be performed, and customized service functions and analysis capabilities need to be provided. Instances of different service types may be deployed on different network slices, or different instances (instances) of a same service type may also be deployed on different network slices. The slice may include a group of network functions (network functions, NFs) and/or a subnet. For example, a slice may include a subnet (R)AN 150, an AMF 137, an SMF 138, and a UPF 139 in FIG. 1. It may be understood that only one network function of each type is schematically illustrated in FIG. 1. During actual network deployment, there may be a plurality of or dozens of network functions or subnets of each type. A plurality of slices may be deployed in the PLMN. All slices may have different performance to meet requirements of different applications and vertical industries. The operator may "customize" a slice based on requirements of customers from the different vertical industries.

When the UE needs to access a specific slice in the network, the UE may provide a slice that the UE intends to access for a core network or indicate the slice that the UE intends to access to the core network in an uplink message (to be specific, a message sent by the UE to the network, for example, a registration request (registration request), a service request (service request), or a periodic registration update (periodic registration update), which is described as a "request message" for convenience of description in the following). Usually, indication information indicating the slice intended to be accessed is referred to as requested (requested) "network slice selection assistance information" (network slice selection assistance information, NSSAI) The NSSAI is actually a list or a set, and includes one or more pieces of single network slice selection assistance information (single network slice selection assistance information, S-NSSAI). One piece of S-NSSAI identifies one network slice (or may be a network slice type). This may also be understood as that the S-NSSAI is identification information of the slice.

In addition, a concept of a network slice instance identifier (Network Slice Instance Identifier/Identity, NSI-ID) is further defined in the standard. A slice identified by one piece of S-NSSAI may be further instantiated into one or more slice instances (slice instances), and each NSI-ID corresponds to one slice instance. In other words, the NSI-ID may also be referred to as identification information of the slice, and one piece of S-NSSAI may alternatively correspond to a plurality of NSI-IDs. In this application, the S-NSSAI is used as an example for description, and the S-NSSAI and the NSI-ID are not strictly distinguished or limited. Descriptions of the S-NSSAI may also be applied to the NSI-ID.

When deploying slices, an operator (PLMN Operator) may further allow some slice customers to have great autonomy and participate in some management and control functions of the slices. Slice-specific authentication is a network control function with limited slice customer participation. To be specific, authentication and authorization are performed on a slice to which a terminal device is to access, that is, "slice-specific authentication", which may also be referred to as "secondary authentication", "second-time authentication", or the like, and is briefly referred to as "slice authentication" in this application.

Before the terminal device is allowed to access the network slice, first, "network-level authentication" needs to be performed between the terminal device and the PLMN network, to be specific, the PLMN needs to perform authentication based on subscription identification information used by the terminal device to subscribe to the PLMN. This type of authentication is usually referred to as primary authentication (primary authentication). Second, the PLMN needs to perform authentication based on a subscription identifier used by the terminal device to subscribe to the DN. This is "slice authentication".

Usually, a server responsible for the slice authentication is an authentication, authorization, and accounting server (authentication, authorization, and accounting server, AAA), and the AAA may be deployed in the PLMN network or deployed outside the PLMN network. The network slice-specific authentication and authorization function (network slice-specific authentication and authorization function, NSSAAF) in FIG. 1 is a network function that assists in completing the slice authentication.

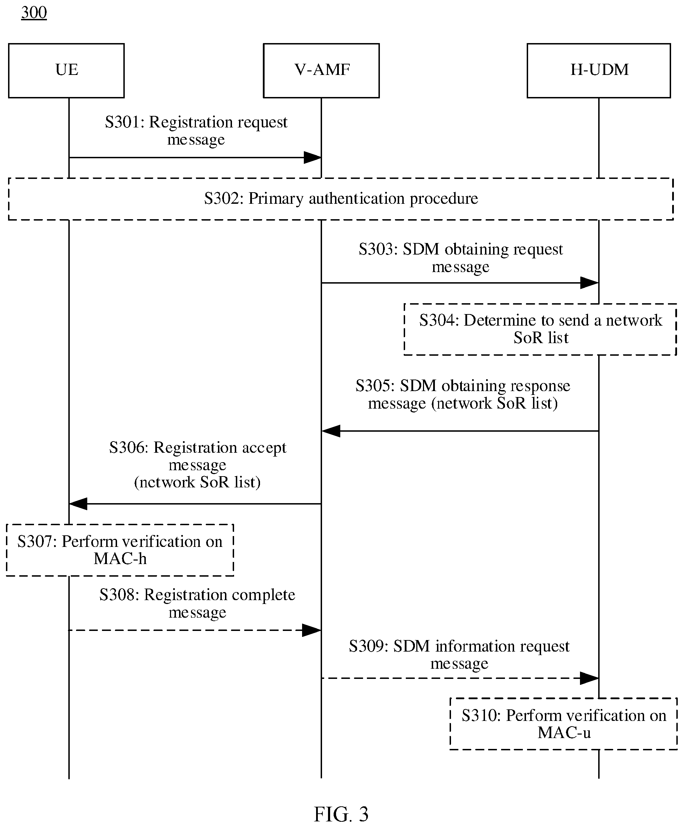

With reference to a method 300 in FIG. 3, the following describes an example procedure in which UE registers with a roaming network.

S301: The UE sends a registration request message to a V-AMF. Correspondingly, the V-AMF receives the registration request message from the UE.

For example, the V-AMF belongs to a core network of a vPLMN in the roaming network (namely, a visited network), and the UE sends the registration request message to the V-AMF, to request to register with the vPLMN. The registration request message includes an identifier of the UE, for example, a subscription permanent identifier (subscription permanent identifier, SUPI), a subscription concealed identifier (subscription concealed identifier, SUCI), or a globally unique temporary identity (globally unique temporary identity, GUTI).

Optionally, the registration request message may further include requested network slice selection assistance information (Requested NSSAI). The requested NSSAI includes an identifier of one or more network slices that the UE requests to access, for example, S-NSSAI-1, S-NSSAI-2 and S-NSSAI-3. In other words, the requested NSSAI is a list of the slices that the UE requests to access.

Optionally, S302 is a primary authentication (Primary Authentication) procedure.

For example, after receiving the registration request message from the UE, the V-AMF determines to initiate a primary authentication procedure between the network and the UE. For example, when the UE performs initial registration or the V-AMF does not store a security context of the UE, the V-AMF determines that the primary authentication procedure needs to be initiated. In this procedure, a home network performs identity authentication on the UE based on subscription information stored by the UE in a UDM. In addition, the UE also performs authentication on the network to avoid access to a fake network. A specific process is not limited in this application.

S303: The V-AMF sends an SDM obtaining request message to the H-UDM. Correspondingly, the H-UDM receives the SDM obtaining request message from the V-AMF.

For example, after the primary authentication procedure is completed, the V-AMF sends the SDM obtaining request (Nudm_SDM_Get_Request) message to the UDM in the home network (namely, the H-UDM) (or an AUSF in the home network). The SDM obtaining request message is used to request to obtain a steering of roaming (steering of roaming, SoR) list.

The SoR list is a list of priorities of candidate vPLMNs. The list lists one or more candidate vPLMNs for the UE, where the vPLMNs correspond to a same priority or different priorities, and each of the vPLMNs further identifies a corresponding access technology (for example, 3GPP access or non-3GPP access). The UE may select a vPLMN to be accessed based on the SoR list. For ease of description, the list of the priorities of the candidate vPLMNs is referred to as a network SoR list.

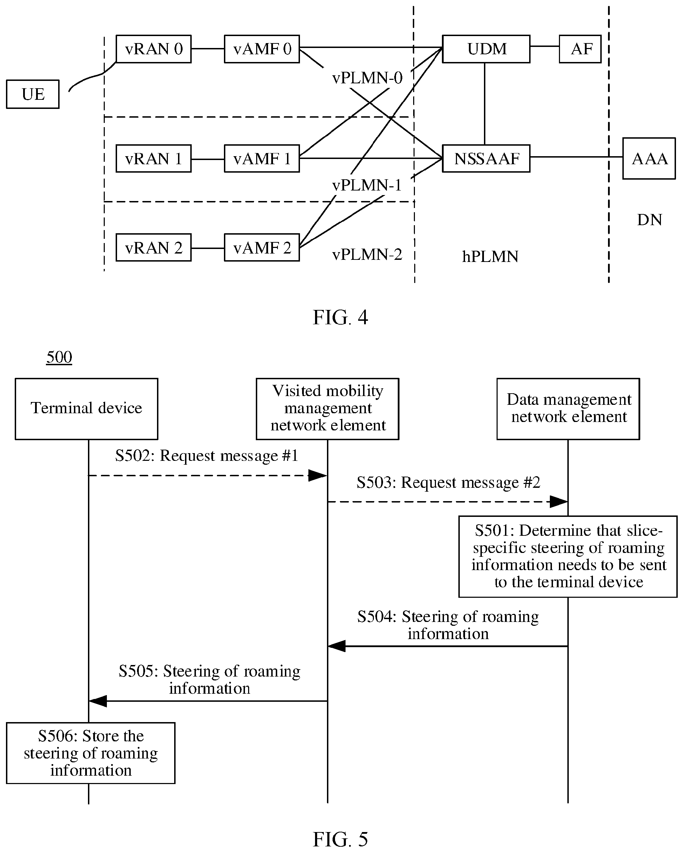

The following describes a specific meaning of the network SoR list with reference to an example provided in FIG. 4.

For example, in a network architecture shown in FIG. 4, the UE requests to register with a network by using a vRAN 0 in a roaming network vPLMN-0. A core network of the vPLMN-0 includes a network function V-AMF 0. In a process in which the UE registers with the roaming network, the V-AMF 0 may obtain, by connecting to a UDM in a home network (namely, a home PLMN or an hPLMN) of the UE, subscription data of the UE in the hPLMN from the UDM.

In addition, FIG. 4 further shows another roaming network that the UE does not access, for example, a vPLMN-1 (for example, including a vRAN 1 and a V-AMF 1) and a vPLMN-2 (for example, including a vRAN 2 and a V-AMF 2). In a procedure in which the UE registers with a vPLMN (for example, the vPLMN-0), the UDM of the home network (hPLMN) may send a network SoR list to the UE, so that the UE can be handed over from a currently registered roaming network (vPLMN-0) to another roaming network. For example, the network SoR list sent by the UDM to the UE includes: a priority value of the vPLMN-1 being 5, a priority of the VPLMN-2 being 1, a priority of the vPLMN-3 (not shown in the figure) being 2, and the like. It is assumed that a smaller value indicates a higher priority (in other words, the vPLMN-2 has a highest priority). In this case, the UE may select the vPLMN-2 as a target roaming network for a handover.

Optionally, in S304, the H-UDM determines to send the network SoR list.

For example, after receiving the SDM obtaining request message from the V-AMF, the H-UDM determines whether to send the network SoR list to the UE.

In a possible implementation, the H-UDM may determine, based on the subscription information of the UE, whether to send the network SoR list to the UE. For example, when the subscription information of the UE includes indication information indicating the H-UDM to send the network SoR list to the UE when the UE roams to the vPLMN and performs initial registration, the H-UDM determines to send the network SoR list to the UE.

In another possible implementation, the H-UDM may alternatively determine, based on a policy configured by a network operator, whether to send the network SoR list to the UE.

The H-UDM obtains the network SoR list when the H-UDM determines to send the network SoR list. The H-UDM may determine the network SoR list, or may obtain the network SoR list by using an AF. This is not limited in this application.

S305: The H-UDM sends an SDM obtaining response (Nudm_SDM_Get_Response) message to the V-AMF. Correspondingly, the V-AMF receives the SDM obtaining response message from the H-UDM.

For example, when the H-UDM determines to send the network SoR list to the UE, the H-UDM sends the SDM obtaining response message to the V-AMF, and includes the network SoR list in the SDM obtaining response message.

Optionally, the SDM obtaining response message may further include one or more of the following information: a SoR message authentication code MAC-h, a counter value of a SoR counter, an ACK (acknowledgment) indication, and the like. The foregoing information and the network SoR list may be collectively referred to as SoR information.

The SoR message authentication code MAC-h is generated by the UDM (or the AUSF) of the home network and is used to perform integrity protection on a SoR message. The SoR message authentication code MAC-h is generated by performing an operation on an input parameter based on a key derivation function (key derivation function, KDF), for example, MAC-h = KDF (input parameter). The KDF may be, for example, a hash function HMAC-SHA-256. The input parameter may be, for example, a key Kausf, the counter value of the SoR counter, or the SoR list.

The counter value is a freshness parameter for generating the MAC-h, and is used to mitigate a risk of replay attacks on the UE.

The ACK indication indicates the UE to send an acknowledgment message. If the UDM requires the UE to send the acknowledgment message, the UDM should generate and store another message authentication code MAC-x expected to be received. A method for generating the MAC-x may be similar to the generation manner of the MAC-h, and the same KDF, Kausf, or counter value may be used. A difference lies in other input parameters. For example, the SoR indication information is included, but the SoR list is not included.

S306: The V-AMF sends a registration accept (Registration Accept) message to the UE. Correspondingly, the UE receives the registration accept message from the V-AMF.

For example, the registration accept message includes the SoR information obtained by the V-AMF from the H-UDM, and the SoR information includes the network SoR list.

Optionally, in S307, the UE performs verification on the MAC-h.

For example, the UE receives the registration accept message from the V-AMF, and obtains the SoR information from the registration accept message. The UE performs verification on the MAC-h when the SoR information includes the message authentication code MAC-h. For example, the UE generates MAC-h' based on the derivation function and the input parameter of the MAC-h. It may be understood that the UE also has the Kausf and the other input parameters. For example, information such as the counter value of the SoR counter and the SoR list is included in the SDM obtaining response message in step S305, and then the V-AMF sends the response message to the UE in step S306. When the MAC-h' is the same as the MAC-h, it indicates that the verification succeeds; otherwise, it indicates that the verification fails. In addition, if the SoR information does not include the message authentication code MAC-h or the counter value, it may also indicate that the verification fails.

Optionally, when the SoR information includes the counter value, the UE may verify whether the counter value carried in the SoR information is greater than a counter value locally stored in the UE. If yes, and the verification on the MAC-h succeeds, the UE locally stores the counter value carried in the SoR information.

The UE stores the received network SoR list if the verification performed by the UE on the MAC-h succeeds.

The UE may select a network to be accessed based on the network SoR list. For example, if the UE determines that there is another available vPLMN in the network SoR list, where the available vPLMN has a higher priority than that of a current vPLMN, the UE may attempt to access the available vPLMN and obtain a service by using the available vPLMN. In a possible implementation, the UE attempts to access a vPLMN that has a highest priority and is available in the network SoR list of the network.

Optionally, in S308, the UE sends a registration complete message to the V-AMF. Correspondingly, the V-AMF receives the registration complete message from the UE.

For example, when the SoR information includes the ACK indication, the UE generates a new message authentication code MAC-u based on the KDF, includes the MAC-u in the registration complete message, and sends the registration complete message to the V-AMF. A method for generating the MAC-u by the UE is similar to the method for generating the MAC-x in S305. For example, the UE generates the MAC-u by using the KDF, the locally stored parameter Kausf, the counter value, and the received parameter SoR indication information.

It should be noted that the input parameters of the MAC-h and the MAC-x may alternatively be determined in another manner. For example, if the UDM sends a transparent container (transparent container), the UDM and the UE use data of the transparent container as the input parameter. This is not limited in this application.

Optionally, in S309, the V-AMF sends an SDM information (Nudm_SDM_Info) request message to the H-UDM. Optionally, the SDM information request message includes the MAC-u. Correspondingly, the H-UDM receives the SDM information request message from the V-AMF.

Optionally, in S310, the H-UDM performs verification on the MAC-u.

For example, after the H-UDM receives the SDM information request message from the V-AMF, the H-UDM performs verification on the MAC-u if the SDM information request message includes the MAC-u. For example, the H-UDM compares the received MAC-u with the locally stored MAC-x, and if the two are the same, it indicates that the verification succeeds.

The foregoing method is described by using an example in which the H-UDM sends the network SoR list to the UE in the registration procedure of the UE. However, it may be understood that the H-UDM may alternatively actively send the network SoR list to the UE after the registration procedure of the UE is completed, in other words, the H-UDM may alternatively actively perform S304 and S305 without receiving the message in S303.

However, the network SoR list lists priorities of entire networks (for example, priorities determined based on network performance or congestion degrees of the entire networks). However, in a 5G network, one PLMN network (or vPLMN network) may support many different network slices, and features such as network performance or congestion degrees of the network slices are also different. Consequently, an entire network-level priority cannot truly reflect slice-specific network performance or a slice-specific priority. In other words, the vPLMN network selected to be accessed by the UE based on the network SoR list may not be a most appropriate vPLMN for the UE. How to select a more appropriate vPLMN for the UE to optimize network performance and improve user experience is a problem that needs to be considered currently.

FIG. 5 is an example flowchart of a method 500 according to an embodiment of this application. The following describes the method 500 by using an example with reference to steps in FIG. 5.

S501: A data management network element determines that slice-specific steering of roaming information needs to be sent to a terminal device.

For example, the network slice-specific steering of roaming information includes a roaming public land mobile network priority list corresponding to one or more network slices. The list is used to select a roaming public land mobile network corresponding to the one or more network slices. The list is determined, for example, based on network performance and congestion degrees of the one or more network slices in different roaming public land mobile networks. One network slice may correspond to a list of priorities of one or more roaming public land mobile networks. For example, network performance used when a first roaming public land mobile network provides a service for a first network slice is greater than network performance used when a second roaming public land mobile network provides a service for the first network slice, and the network performance used when the second roaming public land mobile network provides a service for the first network slice is greater than network performance used when a third roaming public land mobile network provides a service for the first network slice. Therefore, a priority list corresponding to the first network slice may include the following information: a priority of the first roaming public land mobile network being 1, a priority of the second roaming public land mobile network being 2, and a priority of the third roaming public land mobile network being 3, where a smaller number indicates a higher priority. The terminal device may select, based on the list, a roaming public land mobile network that provides a service for the first network slice used by the terminal device. For example, when the first roaming public land mobile network is available, the terminal device may request the first roaming public land mobile network to serve the first network slice.

With reference to examples, the following describes several possible scenarios in which the data management network element determines that the slice-specific steering of roaming information needs to be sent to the terminal device. In a possible implementation (denoted as Manner I), the data management network element receives a slice authentication result associated with the terminal device from a network slice authentication and authorization function network element, where the slice authentication result indicates whether slice authentication on a candidate network slice to be used by the terminal device succeeds. The data management network element determines, in response to the slice authentication result, that the slice-specific steering of roaming information needs to be sent to the terminal device, where the one or more network slices are a network slice on which slice authentication succeeds in the candidate network slice to be used by the terminal device. In other words, after the data management network element obtains the slice authentication result associated with the terminal device, if the slice authentication result indicates that slice authentication on at least one network slice succeeds, the data management network element determines that steering of roaming information corresponding to the at least one network slice on which authentication succeeds needs to be sent to the terminal device.

It may be understood that the network slice authentication and authorization function network element may send a plurality of slice authentication results associated with the terminal device to the data management network element, where the plurality of slice authentication results are in a one-to-one correspondence with a plurality of candidate network slices to be used by the terminal device.

In an example, after receiving slice authentication results of all network slices on which slice authentication needs to be performed in the candidate network slices to be used (namely, candidate network slices) by the terminal device, the data management network element may determine that steering of roaming information corresponding to a successfully authenticated network slice in all the candidate network slices to be used by the terminal device needs to be sent to the terminal device. For example, after receiving one or more slice authentication results associated with the terminal device from the network slice authentication and authorization management function network element, the data management network element may determine whether slice authentication results of all candidate network slices on which authentication needs to be performed are received. The data management network element may first determine all candidate network slices of the terminal device, and then determine, based on subscription information stored in the data management network element, a total quantity of network slices on which slice authentication needs to be performed in the candidate network slices, to determine whether the authentication results of all the candidate network slices on which slice authentication needs to be performed are received. A method for obtaining all the candidate network slices by the data management network element is not limited in this application. In an example, the data management network element may determine all the candidate network slices of the terminal device based on a message received from a visited mobility management network element before S501. For example, in descriptions of subsequent examples S502 and S503, a registration request message of the terminal device includes all network slices that the terminal device requests to access, the network slices (or a part of the network slices) that the terminal device requests to access may be used as all the candidate network slices of the terminal device, and the information may be sent by the visited mobility management network element to the data management network element.

In another example, if the data management network element receives a slice authentication result of a specific candidate network slice to be used by the terminal device, where the slice authentication result indicates that authentication on the network slice succeeds, the data management network element determines that steering of roaming information corresponding to the successfully authenticated network slice needs to be sent to the terminal device. For example, the data management network element receives a first slice authentication result associated with the terminal device from the network slice authentication and authorization management function network element, where the first slice authentication result indicates that slice authentication on a first network slice succeeds. The first network slice is one of candidate network slices to be used by the terminal device. The data management network element determines, in response to the first slice authentication result, to send first steering of roaming information to the terminal device, where the first steering of roaming information includes a roaming public land mobile network priority list corresponding to the first network slice, in other words, the steering of roaming information includes the first steering of roaming information.

It may be further understood that, after obtaining the slice authentication result associated with the terminal device, the network slice authentication and authorization function network element may actively send the slice authentication result to the data management network element based on configuration information, or may send the slice authentication result to the data management network element based on a subscription message or an authentication result obtaining request message of the data management network element, where the subscription message is used to subscribe to the slice authentication result of the candidate network slice to be used by the terminal device, and the authentication result obtaining request message is used to request to obtain the slice authentication result corresponding to the candidate network slice to be used by the terminal device. This is not limited in this application.

In another possible implementation (denoted as Manner II), the data management network element receives a request message used to request to obtain the steering of roaming information, where the request message includes an identifier of a network slice authorized to be used by the terminal device. The network slice authorized to be used by the terminal device is a network slice that the terminal device has permission to use. For example, the network slice authorized to be used by the terminal device includes an allowed network slice carried in a registration accept message received by the terminal device, and/or a network slice on which slice authentication succeeds. For details, refer to subsequent examples of S502 and S503 parts. Details are not described herein.

The data management network element determines, in response to the request message, to send, to the terminal device, the steering of roaming information corresponding to the network slice authorized to be used by the terminal device. The request message may be triggered by the terminal device, or may be triggered by the visited mobility management network element. The following provides an example for description with reference to S502 and S503.

In a first example, the terminal device sends the request message through the visited mobility management network element to request to obtain the slice-specific steering of roaming information.

Optionally, in S502, the terminal device sends a request message #1 to the visited mobility management network element, where the request message #1 includes the identifier of the network slice authorized to be used by the terminal device, and the request message #1 is used to request to obtain the steering of roaming information.

Optionally, the request message #1 indicates to obtain the slice-specific steering of roaming information, or the request message #1 indicates the data management network element to send the slice-specific steering of roaming information to the terminal device. In an implementation, the message may implicitly indicate (for example, by using a message name) to obtain the slice-specific steering of roaming information. In another implementation, an identifier of a network slice (namely, the identifier of the network slice authorized to be used by the terminal device) carried in the request message #1 may indicate to obtain the slice-specific steering of roaming information. Alternatively, the request message #1 may carry one piece of explicit indication information, and the indication information indicates to obtain the slice-specific steering of roaming information.

Optionally, the request message #1 is a message on which security protection is performed by the terminal device, and the security protection herein includes integrity protection and/or encryption protection performed by the terminal device on the identifier of the network slice authorized to be used. The security parameter may be generated by the terminal device, or may be received by the terminal device from the data management network element or the visited mobility management network element. For example, the terminal device obtains the security parameter from the registration accept message. The security parameter may be sent by the data management network element to the visited mobility management network element, and then sent by the visited mobility management network element to the terminal device through the registration accept message. Optionally, the security parameter is different from a security parameter used to protect signaling between the terminal device and the visited mobility management network element, or the security parameter includes at least one parameter that cannot be obtained by the visited mobility management network element. For example, the security parameter includes Kausf, and the visited mobility management network element cannot obtain the parameter.

For example, before S502, the terminal device determines the identifier of the network slice authorized to be used. The following describes, with reference to examples, several possible implementations in which the terminal device determines the identifier of the network slice authorized to be used.

Example 1: The terminal device sends a registration request message to the visited mobility management network element. Correspondingly, the visited mobility management network element receives the registration request message from the terminal device. The visited mobility management network element sends a registration accept message to the terminal device in response to the registration request message, and includes an allowed network slice in the registration accept message. In an implementation, the allowed network slice includes one or more network slices on which slice authentication does not need to be performed in network slices that the terminal device requests to access. Correspondingly, the terminal device receives the registration accept message from the network device. When the registration accept message carries allowed network slices, it indicates that slice authentication does not need to be performed on these network slices. In this case, the terminal device determines that the allowed network slice carried in the registration accept message is the network slice authorized to be used.

Example 2: The terminal device sends a registration request message to the visited mobility management network element. Correspondingly, the visited mobility management network element receives the registration request message from the terminal device. The visited mobility management network element sends a registration accept message to the terminal device in response to the registration request message. Correspondingly, the terminal device receives the registration accept message from the visited mobility management network element. It may be understood that, in Example 2, the registration accept message does not include an allowed network slice. For example, when slice authentication needs to be performed on all network slices that the terminal device requests to access, the visited mobility management network element does not include, in the registration accept message, a network slice allowed to be accessed.

Further, the terminal device performs slice authentication on one or more candidate network slices to be used. It may be understood that, the terminal device may be triggered by the visited mobility management network element to perform a slice authentication procedure for the candidate network slices to be used. This is not limited in this application. After receiving a slice authentication result from the network slice authentication and authorization function network element, the visited mobility management network element sends the slice authentication result to the terminal device, where the slice authentication result indicates whether the one or more candidate network slices to be used by the terminal device are successfully authenticated. After receiving the slice authentication result from the visited mobility management network element, the terminal device determines that a network slice on which slice authentication succeeds in the one or more candidate network slices to be used is the network slice authorized to be used. It may be understood that the terminal device may receive a plurality of slice authentication results, where each of the slice authentication results indicates whether one candidate network slice to be used is successfully authenticated.

Example 3: The terminal device sends a registration request message to the visited mobility management network element. Correspondingly, the visited mobility management network element receives the registration request message from the terminal device. The visited mobility management network element sends a registration accept message to the terminal device in response to the registration request message, and includes an allowed network slice in the registration accept message. In an implementation, the allowed network slice includes a network slice on which slice authentication does not need to be performed in network slices that the terminal device requests to access. Correspondingly, the terminal device receives the registration accept message from the network device.

Further, the terminal device performs slice authentication on one or more candidate network slices to be used. It may be understood that, the terminal device may be triggered by the visited mobility management network element to perform a slice authentication procedure for the candidate network slices to be used. This is not limited in this application. After receiving a slice authentication result from the network slice authentication and authorization function network element, the visited mobility management network element sends the slice authentication result to the terminal device, where the slice authentication result indicates whether the one or more candidate network slices to be used by the terminal device are successfully authenticated. After receiving the slice authentication result from the visited mobility management network element, the terminal device determines that a union set of a network slice on which slice authentication succeeds in the one or more candidate network slices to be used and the network slice allowed to be accessed is the network slice authorized to be used.

Optionally, the terminal device may further determine, with reference to other information, to send the request message #1. For example, when one or more of the following conditions are met, the terminal device sends the request message #1 to the data management network element: The terminal device is located in a preset roaming network; the terminal device accesses a network in a preset access mode; or the terminal device receives indication information that is from the visited mobility management network element and that indicates the terminal device to obtain the slice-specific steering of roaming information.

Optionally, in S503, the visited mobility management network element sends a request message #2 to the data management network element, where the request message #2 includes the identifier of the network slice authorized to be used by the terminal device, and the request message #2 is used to request to obtain the steering of roaming information. For example, after receiving the request message #1 from the terminal device, the visited mobility management network element sends the request message #2 to the data management network element based on the request message #1. It may be understood that the visited mobility management network element may not identify information carried in the request message #1, but transparently transmit the information carried in the request message #1 to the data management network element. In other words, in this case, the request message #2 includes the information carried in the request message #1.

In a second example, the visited mobility management network element actively sends the request message to the data management network element to request to obtain the slice-specific steering of roaming information.

Optionally, in S503, the visited mobility management network element sends a request message #2 to the data management network element, where the request message #2 includes the identifier of the network slice authorized to be used by the terminal device, and the request message #2 is used to request to obtain the steering of roaming information. Correspondingly, the data management network element receives the request message #2 from the visited mobility management network element.

Optionally, before S503, the visited mobility management network element determines the identifier of the network slice authorized to be used. The following describes, with reference to examples, several possible implementations in which the visited mobility management network element obtains the identifier of the network slice authorized to be used.

Example 1: The visited mobility management network element receives a registration request message from the terminal device. The visited mobility management network element sends a registration accept message to the terminal device in response to the registration request message, where the registration accept message includes an allowed network slice. In an implementation, the registration request message includes a requested network slice, the requested network slice includes an identifier of one or more network slices that the terminal device requests to use, and the allowed network slice includes a network slice on which slice authentication does not need to be performed in the requested network slice. The visited mobility management network element determines that the allowed network slice is the network slice authorized to be used by the terminal device.

Example 2: The visited mobility management network element receives a registration request message from the terminal device. The visited mobility management network element sends a registration accept message to the terminal device in response to the registration request message. It may be understood that, in Example 2, the registration accept message does not include an allowed network slice. For example, when slice authentication needs to be performed on all network slices that the terminal device requests to access, the visited mobility management network element does not include, in the registration accept message, a network slice allowed to be accessed.

Further, the visited mobility management network element triggers the terminal device to perform slice authentication on one or more candidate network slices to be used. After receiving a slice authentication result from the network slice authentication and authorization function network element, the visited mobility management network element sends the slice authentication result to the terminal device, where the slice authentication result indicates whether the one or more candidate network slices to be used by the terminal device are successfully authenticated. The visited mobility management network element determines that a network slice on which slice authentication succeeds in the one or more candidate network slices to be used is the network slice authorized to be used by the terminal device.

Example 3: The visited mobility management network element receives a registration request message from the terminal device. The visited mobility management network element sends a registration accept message to the terminal device in response to the registration request message, where the registration accept message includes an allowed network slice. In an implementation, the registration request message includes a requested network slice, the requested network slice includes an identifier of one or more network slices that the terminal device requests to use, and the allowed network slice includes a network slice on which slice authentication does not need to be performed in the requested network slice.

Further, the visited mobility management network element triggers the terminal device to perform slice authentication on one or more candidate network slices to be used. After receiving a slice authentication result from the network slice authentication and authorization function network element, the visited mobility management network element sends the slice authentication result to the terminal device, where the slice authentication result indicates whether the one or more candidate network slices to be used by the terminal device are successfully authenticated.

The visited mobility management network element determines that a union set of a network slice on which slice authentication succeeds in the one or more candidate network slices to be used and the network slice allowed to be accessed is the network slice authorized to be used by the terminal device.

In still another possible implementation (denoted as Manner III), when the identifier of the one or more network slices belongs to a slice list preconfigured by the data management network element, the data management network element determines that steering of roaming information corresponding to the one or more network slices needs to be sent to the terminal device, where the preconfigured slice list indicates a network slice corresponding to the slice-specific steering of roaming information sent to the terminal device. It may be understood that Manner I, Manner II, and Manner III described above may be separately implemented, or may be implemented in combination in any manner. For example, when Manner I and Manner III are implemented in combination, after the data management network element obtains the slice authentication result associated with the terminal device, if the slice authentication result indicates that slice authentication on at least one network slice succeeds, and the at least one network slice belongs to the slice list preconfigured by the data management network element, the data management network element determines that steering of roaming information corresponding to the at least one network slice needs to be sent to the terminal device.

When determining that the steering of roaming information corresponding to the one or more network slices needs to be sent to the terminal device, the data management network element obtains the steering of roaming information corresponding to the one or more network slices. It may be understood that the data management network element may determine the steering of roaming information, or may obtain the steering of roaming information through an application function network element. This is not limited in this application.

It may be understood that the data management network element may send the slice-specific steering of roaming information to the terminal device through one or more messages. For example, when determining a network slice on which slice authentication does not need to be performed in the network slice authorized to be used by the terminal device, the data management network element may first send steering of roaming information corresponding to the network slice on which slice authentication does not need to be performed, and when determining a network slice on which slice authentication succeeds in the network slice authorized to be used by the terminal device, the data management network element sends steering of roaming information corresponding to the network slice on which slice authentication succeeds. The data management network element may alternatively send, when determining all network slices authorized to be used by the terminal device, steering of roaming information corresponding to all the network slices authorized to be used.

S504: The data management network element sends the steering of roaming information to the visited mobility management network element. Correspondingly, the visited mobility management network element receives the steering of roaming information from the data management network element.

S505: The visited mobility management network element sends the steering of roaming information to the terminal device. Correspondingly, the terminal device receives the steering of roaming information from the visited mobility management network element.

S506: The terminal device stores the steering of roaming information.

For example, the terminal device may select, based on the stored slice-specific steering of roaming information, a roaming public land mobile network that provides a service for a network slice used by the terminal device. In a possible implementation, the terminal device requests to obtain a corresponding slice service from an available roaming public land mobile network with a highest priority in the priority list in the steering of roaming information. For example, the steering of roaming information includes first roaming information corresponding to a first network slice, the first steering of roaming information includes a roaming public land mobile network priority list corresponding to the first network slice, and the list includes, for example, the following information: a priority of a first roaming public land mobile network being 1, a priority of a second roaming public land mobile network being 2, and a priority of a third roaming public land mobile network being 3. It is assumed that a smaller number indicates a higher priority, and a network currently accessed by the terminal device is the second roaming public land mobile network. Therefore, when the first roaming public land mobile network is available, the terminal device requests the first roaming public land mobile network to provide a service for the first network slice used by the terminal device.

Based on the foregoing solution, the terminal device may obtain slice-specific steering of roaming information, so that the terminal device can select a more appropriate roaming public land mobile network to provide a service for the network slice used by the terminal device, thereby optimizing network performance and improving user experience. On the other hand, the steering of roaming information obtained by the terminal device corresponds to the network slice authorized to be used by the terminal device, so that a risk of slice privacy leakage can be reduced, thereby improving service security.

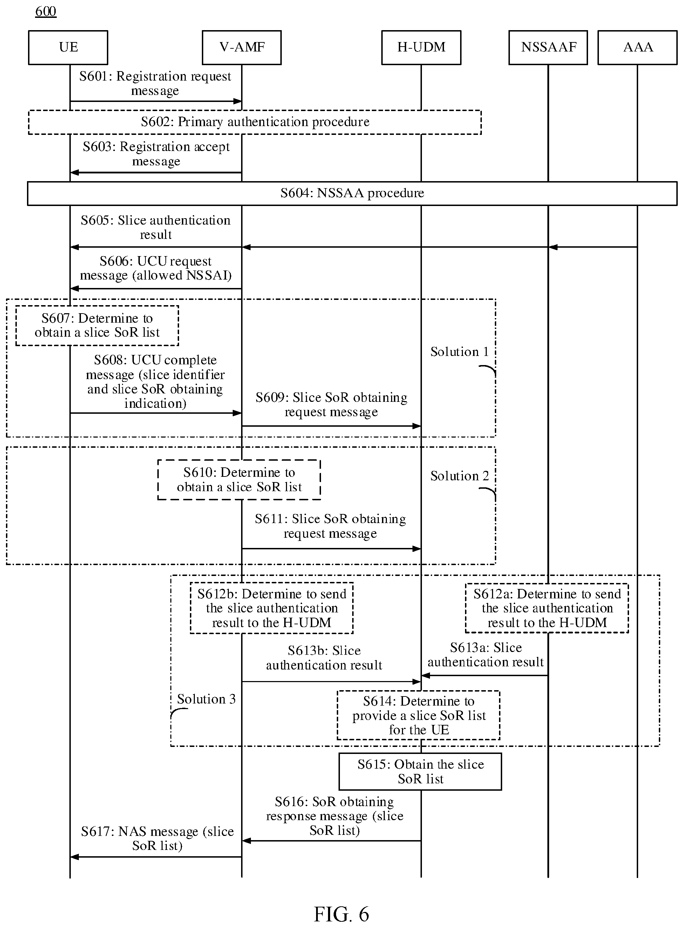

FIG. 6 is an example flowchart of a method 600 according to an embodiment of this application. It may be understood that the method 600 may be a possible implementation of the method 500. For example, S608 in the method 600 may correspond to S502 in the method 500, S611 in the method 600 may correspond to S503 in the method 500, S614 in the method 600 may correspond to S501 in the method 500, and S616 and S617 in the method 600 may respectively correspond to S504 and S505 in the method 500. In the method 600, an example in which the terminal device is UE, the visited mobility management network element is a V-AMF, and the data management network element is an H-UDM is used for description. In addition, an example in which the roaming public land mobile network is a PLMN and the steering of roaming information is SoR information is used for description. The following describes the method 600 by using an example with reference to steps in FIG. 6.

S601: The UE sends a registration request message to the V-AMF. Correspondingly, the V-AMF receives the registration request message from the UE.

Optionally, S602 is a primary authentication procedure.

S601 and S602 are similar to S301 and S302 in the method 300, and details are not described herein.

Optionally, after S602, the V-AMF and the H-UDM may further perform the procedures shown in S303 to S305 in the method 300. This is not limited in this application.

S603: The V-AMF sends a registration accept message to the UE. Correspondingly, the UE receives the registration accept message from the V-AMF.

It may be understood that, if the V-AMF and the H-UDM further perform, after S602, procedures as those described in S303 to S305 in the method 300, the V-AMF may include, in the registration accept message, a network SoR list received from the H-UDM. In other words, S603 may be as described in S306 in the method 300. If the V-AMF does not receive a network SoR list from the H-UDM, the V-AMF does not include the network SoR list in the registration accept message.

S604: Perform a network slice-specific authentication and authorization (network slice-specific authentication and authorization, NSSAA) procedure.

For example, if the UE includes requested NSSAI in the registration request message, the V-AMF may determine, based on information such as the requested NSSAI and obtained subscription data of the UE, whether a slice authentication (NSSAA) procedure needs to be performed on the UE. If necessary, the V-AMF triggers the NSSAA procedure (that is, S604). For example, the UE and a slice authentication server (AAA) perform slice authentication through a V-AMF of a visited network and an NSSAAF of a home network. A specific process is not limited in this application. It may be understood that the AAA interfaces with the NSSAAF of the home network.

S605: The AAA sends a slice authentication result to the UE through the NSSAAF and the V-AMF. Correspondingly, the UE receives the slice authentication result.

It may be understood that when the requested NSSAI includes a plurality of slices that need to be authenticated, processes of S604 and S605 may be repeated for a plurality of times, to perform authentication on each of the network slices that need to be authenticated.

It should be noted that S605 may also be understood as a part of the NSSAA procedure in S604. This is not limited in this application.

S606: The V-AMF sends a UE configuration update (UE configuration update, UCU) request message to the UE, where the UCU request message includes allowed NSSAI. Correspondingly, the UE receives the UCU request message from the V-AMF.

For example, after authentication procedures of all slices are completed, the V-AMF may send the allowed network slice selection assistance information (Allowed NSSAI) to the UE by using a UCU procedure. The allowed NSSAI includes an identifier of one or more network slices allowed to be used by the UE, in other words, the allowed NSSAI is a list of the slices allowed to be used by the UE, or a list of authorized slices. The allowed NSSAI includes a slice on which slice authentication succeeds and a slice on which slice authentication does not need to be performed (if any).

Optionally, the V-AMF may further include rejected network slice selection assistance information (Rejected NSSAI) in the UCU request message, where the rejected NSSAI includes an identifier of one or more slices rejected to be used by the UE, and the slices rejected to be accessed by the UE may be slices on which slice authentication fails, in other words, the rejected NSSAI is a list of slices not allowed to be accessed by the UE, or a list of slices that are unauthorized.

Further, the UE or a network side may trigger a procedure of obtaining a slice SoR list. It may be understood that the slice SoR list in this embodiment of this application is a network slice-specific SoR list, a slice SoR list corresponding to one network slice includes a list of priorities of candidate vPLMNs corresponding to the network slice, and the priority list is determined based on, for example, network performance and congestion degrees of the network slice in different vPLMNs. The slice SoR list is used to select a roaming public land mobile network corresponding to the network slice. One network slice corresponds to one or more slice SoR lists. For example, one network slice corresponds to one slice SoR list if corresponding to each different access technology.

The following describes, with reference to three possible implementations, an example of a procedure in which the UE obtains a slice SoR list.

Solution 1: The UE triggers the procedure of obtaining a slice SoR list.

Optionally, in S607, the UE determines to obtain the slice SoR list.

In a possible implementation, if receiving a slice authentication result for a specific network slice in S605, where the slice authentication result indicates that authentication on the network slice succeeds, the UE may determine to obtain a slice SoR list corresponding to the network slice on which authentication succeeds. If the UE receives a slice authentication result for a specific network slice in S605, where the slice authentication result indicates that authentication on the network slice fails, the UE determines not to obtain a slice SoR list corresponding to the network slice on which authentication fails. In other words, S607 may be performed after S605.

In another possible implementation, if receiving the allowed NSSAI from the V-AMF, where the allowed NSSAI is not empty, the UE may determine to obtain a slice SoR list corresponding to a network slice in the allowed NSSAI. If the UE further receives the rejected NSSAI from the V-AMF, where the rejected NSSAI is not empty, the UE determines not to obtain a slice SoR list corresponding to a network slice in the rejected NSSAI. In other words, S607 may be performed after S606.

Optionally, the UE may further determine, based on other information, whether to trigger the procedure of obtaining the slice SoR list. For example, the UE preconfigures a slice list (for convenience, the slice list is denoted as a slice list #1). The slice list #1 indicates the terminal device to obtain a network slice corresponding to a slice SoR list, in other words, the UE may obtain a slice SoR list corresponding to a network slice in the slice list #1. The slice list #1 includes an identifier of one or more slices (for example, S-NSSAI-3 and S-NSSAI-4). When there is an intersection between the slices in the slice list #1 and slices on which authentication succeeds (or slices in the allowed NSSAI), the UE determines to obtain a slice SOR list corresponding to a slice in the intersection set. For another example, preconfiguration information of the UE indicates that the UE may obtain a slice SoR list corresponding to a network slice accessed in a specific access mode (for example, 3GPP access or non-3GPP access). When the UE determines that a slice corresponding to the specific access mode exists in the slices on which authentication succeeds (or the slices in the allowed NSSAI), the UE determines to obtain a slice SoR list corresponding to the slice. For another example, when preconfiguration information of the UE indicates that the UE is in a specific visited network (for example, VPLMN-1), the procedure of obtaining the slice SoR list is triggered. When the UE is in the VPLMN-1, the UE determines to trigger the procedure of obtaining the slice SoR list; otherwise, the UE determines not to trigger the procedure of obtaining the slice SoR list. For another example, the UE may further determine, based on a slice list #2 received (in, for example, S605 or S603), whether to trigger a procedure of obtaining a slice SoR list corresponding to a specific slice. Specifically, for example, the message in S603 or S605 includes the slice list #2, where the slice list #2 includes an identifier of one or more slices. In an implementation, the slice list #2 (or indication information corresponding to the slice list #2) indicates that the UE may obtain a slice SoR list corresponding to the one or more slices in the slice list #2. In this implementation, if an authentication result for a specific slice in the slice list #2 is "success" (or a specific slice belongs to the allowed NSSAI), the UE determines to obtain a slice SoR list corresponding to the slice. If a specific slice is not the slice in the slice list #2, the UE does not obtain a SoR list of the slice even if a slice authentication result for the slice is "success". Optionally, in another implementation, the slice list #2 (or indication information corresponding to the slice list #2) indicates the UE not to obtain a slice SoR list corresponding to the one or more slices in the slice list #2, in other words, the UE cannot or does not need to trigger a procedure of obtaining a SoR list corresponding to the slice in the slice list #2. If a specific network slice is the slice in the slice list #2, even if a slice authentication result for the slice is "success", the UE does not obtain a SoR list corresponding to the slice. If there are one or more network slices whose authentication results are "success" and that do not belong to the slice list #2, the UE determines to obtain a slice SoR list corresponding to the one or more network slices. Optionally, the slice list #2 may be sent by a network element (for example, an H-UDM, an H-ARPF, or an AF) in the home network to the UE through the V-AMF (for example, step S305 and step S306). A specific process is not limited in this application. It may be understood that different manners in the foregoing examples may be randomly combined. This is not limited in this application.

S608: The UE sends a UCU complete (UCU Complete) message to the V-AMF. Correspondingly, the V-AMF receives the UCU complete message from the UE.

Optionally, the UCU complete message includes a slice list #3, where the slice list #3 includes an identifier of one or more network slices, and the UE requests to obtain a slice SoR list corresponding to the one or more network slices. The one or more network slices are a network slice authorized to be used by the UE. In an implementation, the slice list #3 is the allowed NSSAI. In another implementation, all slice identifiers in the slice list #3 are included in the allowed NSSAI, in other words, the slice identifier list is a part of the allowed NSSAI. For example, the slice list #3 includes an intersection of the allowed NSSAI and the slice list #1, or the slice list #3 includes an intersection of the allowed NSSAI and the slice list #2.

Optionally, the UCU complete message further includes slice SoR obtaining indication information, and the slice SoR list obtaining indication information indicates that the UE requests to obtain a slice-specific SoR list.

It may be understood that the UCU complete message includes at least one of the slice list #3 and the slice SoR obtaining indication information.

The foregoing example is described by using an example in which the UE includes the slice list #3 and/or the slice SoR obtaining indication information in the UCU complete message. However, it may be understood that the UE may alternatively send the slice list #3 and/or the slice SoR obtaining indication information to the V-AMF through another message. This is not limited in this application.

Optionally, the UE may further perform additional security (which is different from NAS security) protection on information carried in the UCU complete message. For example, the UE may perform integrity protection and/or confidentiality protection on the information (for example, an identifier of a network slice authorized to be used) carried in the UCU complete message. It may be understood that, to prevent the V-AMF from eavesdropping on or tampering with the information, the UE may perform integrity protection and/or confidentiality protection by using a key that cannot be obtained by the V-AMF, for example, a key Kausf or another key that is derived from the key Kausf and that cannot be obtained by the V-AMF.

Further, to avoid a replay attack and to detect whether the V-AMF modifies the message, the UE may perform the integrity protection by generating MAC-UE by using a counter (represented by counter-UE), a timestamp (current time), or a generated one-time random number Nounce as an additional input parameter (a freshness parameter), or perform the confidentiality protection (that is, encryption) by using the foregoing one or more parameters as an additional input parameter. For a manner of generating the MAC-UE, refer to related descriptions in the method 400. Details are not described herein. The counter-UE may be generated by the UE, or may be calculated from the counter value described in the method 400. In an example, the UE calculates the counter-UE in the following manner: counter-UE = f (counter), in other words, a value of the counter-UE is obtained by calculating the counter value by using a predetermined function f. For example, counter-UE = counter + 1. A used function f is not limited in this application. A main advantage of using this calculation manner is that the H-UDM may calculate the value of the counter-UE from the counter, to detect a possible message loss scenario (for example, a message is intentionally discarded by the V-AMF), in other words, detect a dishonest V-AMF, and take another measure, for example, a measure such as lowering the V-AMF to a lowest priority. The UE may include the counter-UE in the UCU complete message.

S609: The V-AMF sends a slice SoR obtaining request message to the H-UDM. Correspondingly, the H-UDM receives the slice SoR obtaining request message from the V-AMF.

For example, the slice SoR obtaining request message includes the slice list #3 and/or the slice SoR obtaining indication information described in S608. Optionally, the slice SoR obtaining request message may further include one or more of the MAC-UE, the counter-UE, the timestamp, and the Nounce.

It may be understood that, in an implementation, the V-AMF may not identify content in the message received from the UE, but directly transparently transmit or forward the message.

S615: The H-UDM obtains the slice SoR list.

For example, the H-UDM obtains the slice SoR list after receiving the slice SoR request message from the V-AMF.

In an implementation, the H-UDM obtains a slice SoR list corresponding to a network slice in the slice identifier list when the slice SoR request message carries the slice list #3. Optionally, if the H-UDM further receives a slice authentication result from the NSSAAF, in other words, the H-UDM obtains a list of identifiers of successfully authenticated slices from the NSSAAF, the H-UDM may further verify whether the slice authentication result (or the list of the successfully authenticated slices) matches the slice identifier list carried in the slice SoR obtaining request message. For example, if the result from the NSSAAF indicates that S-NSSAI-1 fails to be authenticated, but the slice identifier list carried in the slice SoR obtaining request message includes the S-NSSAI-1, the H-UDM determines that the verification fails. In this case, the H-UDM refuses to send the slice SoR list.

In another implementation, when the slice SoR request message does not carry the slice identifier list but carries the slice SoR obtaining indication information, the H-UDM obtains a slice authentication result through the NSSAAF, in other words, the H-UDM obtains a list of identifiers of successfully authenticated slices through the NSSAAF, and the H-UDM obtains slice SoR lists corresponding to the successfully authenticated slices.

In another implementation, the H-UDM obtains only slice SoR lists corresponding to some network slices in the slice list #3 when the slice SoR request message carries the slice list #3. For example, the H-UDM preconfigures a slice list #4, where the slice list #4 indicates a network slice corresponding to a slice SoR list sent to the UE, to be specific, the H-UDM may send the slice SoR list corresponding to the network slice in the slice list #4 to the UE. When there is an intersection between the slice list #3 and the slice list #4, the H-UDM obtains a slice SoR list corresponding to a network slice in the intersection. For another example, the H-UDM preconfigures a slice list #5, but the H-UDM cannot send a slice SoR list corresponding to a network slice in the slice list #5 to the UE. When one or more slices in the slice list #3 do not belong to the slice list #5, the H-UDM obtains a slice SoR list corresponding to the one or more slices.

It may be understood that the H-UDM may determine the slice SoR list, or may obtain the slice SoR list through the AF. This is not limited in this application.

S616: The H-UDM sends a slice SoR obtaining response message to the V-AMF. Correspondingly, the V-AMF receives the SoR obtaining response message from the H-UDM.

For example, the SoR obtaining response message includes the slice SoR list obtained by the H-UDM in S615 and/or slice SoR indication information.

Optionally, the SoR obtaining response message may further include information such as an ACK (acknowledgment) indication, a SoR message authentication code MAC-h, and a counter value of a SoR counter. For details, refer to S405 in the method 400. This is not limited herein. It should be noted that, different from the reference method 400, the SoR list sent in this case is one or more slice-specific SoR lists, and when the MAC-h is generated, information that needs to be protected includes all slice-specific SoR lists and/or slice-specific SoR indication information.

Optionally, in a process of obtaining the slice SoR list corresponding to the one or more network slices, if the H-UDM finds that slice SoR lists corresponding to several (two or more) of the one or more network slices are the same, or a slice SoR list corresponding to one or more network slices is the same as the network SoR list, the H-UDM does not need to repeatedly send the slice SoR lists corresponding to these slices. In this case, the H-UDM may add one piece of slice SoR indication information, to indicate that a slice SoR list of one or more slices is the same as a slice SoR list of another slice (or is the same as the network SoR list), or send the SoR lists in an aggregated manner. Further, an example is provided for description.

For example, the slice identifier list requested by the UE includes a slice S-NSSAI-1, a slice S-NSSAI-2, and a slice S-NSSAI-3. The H-UDM determines that a SoR list of the S-NSSAI-1 is the same as a SoR list of the slice S-NSSAI-2, and a SoR list of the slice S-NSSAI-3 is the same as the network-level SoR list. The H-UDM once sent the network-level SoR list (for example, in S603). In this case, in a possible implementation, the H-UDM does not obtain the SoR lists of the slice S-NSSAI-2 and the slice S-NSSAI-3, but obtains only the SoR list of the slice S-NSSAI-1. When the H-UDM sends the slice SoR list, the H-UDM does not send the SoR lists of the slice S-NSSAI-2 and the slice S-NSSAI-3, but sends indication information indicating that the slice SoR list of the S-NSSAI-2 is the same as the slice SoR list of the S-NSSAI-1, and the slice SoR list of the S-NSSAI-3 is the same as the network SoR list.

S617: The V-AMF sends a NAS message to the UE, where the NAS message includes the slice SoR list and/or the slice SoR indication information. Correspondingly, the UE receives the NAS message from the V-AMF.

The UE stores a received slice SoR list. Optionally, the UE may store the SoR list when security verification (for example, verification about whether the integrity protection parameter MAC-h is correct) on the slice SoR list succeeds.

The UE may select, based on the slice SoR list, a vPLMN network that provides a service for a slice used by the UE. For example, if the UE determines that there is another available vPLMN in the network SoR list, where the available vPLMN has a higher priority than that of a current vPLMN, the UE may attempt to request to obtain a corresponding slice service from the available vPLMN. In a possible implementation, the UE requests to obtain a corresponding slice service from an available vPLMN with a highest priority in the network SoR list.

Solution 2: The V-AMF triggers the procedure of obtaining a slice SoR list.

S610: The V-AMF determines to obtain the slice SoR list.

In an implementation, if receiving a slice authentication result that is for a specific network slice and that is from the NSSAAF in S605, where the slice authentication result is "success", the V-AMF may determine to obtain a slice SoR list corresponding to the network slice on which authentication succeeds. If the V-AMF receives a slice authentication result for a specific network slice in S605, where the slice authentication result is "failure", the V-AMF determines not to obtain a slice SoR list of the network slice on which authentication fails. In other words, S610 may be performed after S605.

In another possible implementation, if the V-AMF determines the allowed NSSAI, where the allowed NSSAI is not empty, the V-AMF determines to obtain a slice SoR list corresponding to a network slice in the allowed NSSAI. In other words, S610 may be performed after the V-AMF determines the allowed NSSAI. Specifically, S610 may be performed before S606, or may be performed after S606. This is not limited in this application.

Optionally, the V-AMF may further determine, based on other information, whether to trigger the procedure of obtaining the slice SoR list. For details, refer to the solution in which the UE determines to obtain the slice SoR list in S607. A difference lies in that S610 is performed by the V-AMF, and the other information may be information preconfigured by the V-AMF, or may be information obtained by the V-AMF from the H-UDM. This is not limited herein.

S611: The V-AMF sends a slice SoR obtaining request message to the H-UDM. Correspondingly, the H-UDM receives the slice SoR obtaining request message from the V-AMF.

For example, the slice SoR obtaining request message includes a slice identifier list and/or slice SoR obtaining indication information. For descriptions of the slice identifier list and the slice SoR obtaining indication information, refer to the descriptions of the S608 part. Details are not described herein.

It may be understood that in Solution 2, additional security protection described in S608 and S609 may not be performed on the information carried in the slice SoR obtaining request message.

Further, the H-UDM determines the slice SoR list, and sends the slice SoR list to the UE through the V-AMF. For details, refer to the descriptions of the S615 part to the S617 part in Solution 1. Details are not described herein.

Solution 3: The H-UDM triggers the procedure of obtaining a slice SoR list.

In Solution 3, the UDM needs to obtain a slice authentication result of the UE. The UDM may obtain the slice authentication result through the NSSAAF or the V-AMF. The following separately provides examples for description.

Optionally, in S612a, the NSSAAF determines to send the slice authentication result to the H-UDM. Optionally, in S612b, the V-AMF determines to send the slice authentication result to the H-UDM. For example, the NSSAAF (or the V-AMF) may determine, in any one or more of the following scenarios, to send the slice authentication result to the H-UDM.
(1) The H-UDM subscribes to the slice authentication result from the NSSAAF (or the V-AMF) in advance.
(2) The NSSAAF (or the V-AMF) receives a request message that is from the H-UDM and that is used to request to obtain the slice authentication result.
(3) Preconfiguration information of the NSSAAF (or the V-AMF) indicates the NSSAAF (or the V-AMF) to send the slice authentication result to the H-UDM after obtaining the slice authentication result.

It may be understood that the foregoing scenarios are all for specified UE (for example, a specified UE ID or GPSI), or/and a specified slice (for example, an identifier is S-NSSAI), or/and a specific access mode (for example, a 3GPP access mode or a non-3GPP access mode).

After receiving the slice authentication result, the NSSAAF (or the V-AMF) may further determine whether the slice authentication result needs to be sent to the H-UDM. In an implementation method, if the slice authentication result received by the NSSAAF (or the V-AMF) is "success", the NSSAAF determines to send the slice authentication result to the H-UDM. In another implementation method, the NSSAAF (or the V-AMF) sends the slice authentication result to the H-UDM regardless of whether the received slice authentication result is "success" or "failure".

S613a: The NSSAAF sends the slice authentication result to the H-UDM. Correspondingly, the H-UDM receives the slice authentication result from the NSSAAF. Alternatively, in S613b, the V-AMF sends the slice authentication result to the H-UDM. Correspondingly, the H-UDM receives the slice authentication result from the V-AMF.

It may be understood that the slice authentication result may be associated with one or more of the following information: a UE ID (for example, a GPSI), a slice identifier (S-NSSAI), and an access mode.

It may be further understood that S613a/S613b may be performed exactly after the NSSAAF receives the slice authentication result in S605 (in other words, before S606), or may be performed after S606. This is not limited in this application.

Optionally, in S614, the H-UDM determines to provide a slice SoR list for the UE.

For example, after receiving a slice authentication result indicating that authentication succeeds, the H-UDM may determine that a slice SoR list corresponding to a slice on which authentication succeeds needs to be sent to the UE. For example, after receiving an authentication result of each slice on which authentication succeeds, the H-UDM may determine that a slice SoR list corresponding to the slice on which authentication succeeds needs to be sent to the UE. Alternatively, after receiving slice authentication results of all candidate slices to be used by the UE, when determining that a slice authentication result of at least one network slice in the candidate slices to be used by the UE is "success", the H-UDM may determine to send, to the UE, a SoR list corresponding to the slice on which authentication succeeds. For example, the UE sends, to the V-AMF in S601, a slice that the UE requests to use, and when the V-AMF interacts with the H-UDM (for example, in S602 or after S602, similar to S303 to S305, which is not limited in this application), the V-AMF may send the slice that the UE requests to use to the H-UDM, so that the H-UDM obtains all the candidate slices to be used by the UE. When the H-UDM obtains the authentication results (success or failure) of all the candidate slices in S613a or S613b, the H-UDM may determine to send, to the UE, slice SoR lists corresponding to all slices on which authentication succeeds. Optionally, the H-UDM may also set a timer, and preset a period of time. When the H-UDM obtains the authentication results (success or failure) of all the candidate slices in S613a or S613b within the period of time, the H-UDM determines to send, to the UE, slice SoR lists corresponding to all slices on which authentication succeeds.

Optionally, the H-UDM may further determine, with reference to other information, a slice SoR list of which slice needs to be sent. For example, the H-UDM preconfigures a slice list, where the slice list includes an identifier of one or more network slices. If a slice on which authentication succeeds belongs to the slice list, the H-UDM determines to send a slice SoR list corresponding to the slice to the UE.

Further, the H-UDM obtains the slice SoR list, and sends the slice SoR list to the UE through the V-AMF. For details, refer to descriptions of the S615 part to the S617 part in Solution 1. Details are not described herein.

Based on the foregoing solution, the UE may obtain a slice-specific SoR list, and the terminal device may select an appropriate vPLMN based on a to-be-accessed network slice, so that network performance can be optimized, thereby improving user experience. Specifically, one PLMN network (or vPLMN network) may support many different network slices, and features such as network performance and congestion degrees of the network slices are also different. Consequently, an entire network-level priority indicated by the network SoR list cannot truly reflect slice-specific network performance or a slice-specific priority. However, the slice SoR list is provided for the UE, so that the UE can determine a priority of the vPLMN corresponding to the to-be-accessed network slice, and therefore can select a more appropriate vPLMN for the network slice to be accessed by the UE.

According to another aspect, in the foregoing solution, providing the UE with a SoR list corresponding to an unauthorized network slice can be avoided, thereby reducing a risk of slice privacy leakage. Specifically, in the foregoing solution, sending slice-specific SoR information corresponding to an authorized slice to the UE is determined based on authorization information (for example, slice authentication of the UE succeeds), instead of being determined merely depending on a list of slices requested to be accessed ("requested NSSAI") by the UE during registration or a list that is of subscribed slices ("subscribed NSSAI") of the UE and that is stored in the UDM. Neither information about the subscribed slices that are of the UE and that are stored in the UDM nor the slices requested to be accessed by the UE during registration indicates that the UE is authorized to use the slice. For example, when authorization for accessing a slice is revoked or the authorization is temporarily revoked for the UE, authorization revocation information is not reflected in subscription data of the UDM in time. Further, when the slice is a slice that can be authorized to the UE for access only after slice authentication is performed, authorization information is from an external DN, to be specific, a slice authentication procedure needs to be performed, and the authorization information is not stored in a UDM of an operator network either. If the UE is not a terminal authorized to use a specific slice, but the UDM sends SoR information related to the slice to the UE, there is a risk of leaking the SoR information of the slice. Further, sending the SoR information to the unauthorized UE further violates a principle of least privilege (Principle of least privilege) in a security design principle, to be specific, the unauthorized UE does not need the SoR information of the slice, and should not receive the SoR information. According to the foregoing solution, the SoR list corresponding to the network slice authorized to be used is provided for the UE, so that the risk of slice privacy leakage can be reduced, thereby improving service security.

According to still another aspect, the UDM may dynamically obtain the slice SoR information. Specifically, according to an original service requirement, the home network usually dynamically adjusts a PLMN priority list in SoR information based on a network running status and notifies related UE. However, if slice-specific SoR information is determined only based on static subscription data, a service requirement for sending SoR may not be met. For example, the home network may consider distributing UEs in a specific area to a plurality of vPLMNs as much as possible, instead of centralizing the UEs in one or several vPLMNs. Therefore, when one UE is in a same area, a PLMN priority list of SoR of the UE changes with time, or UEs in a same area have different PLMN priority lists of SoR at same time. Therefore, the UDM dynamically adjusts, or dynamically adjusts, through the AF, a slice SoR list based on a specific data analysis solution, so that network performance can be enhanced, thereby improving user experience.

According to yet another aspect, in the foregoing solution, only the SoR list corresponding to the authorized network slice is sent to the UE, so that a resource waste caused by an excessively large SoR data packet can be reduced.

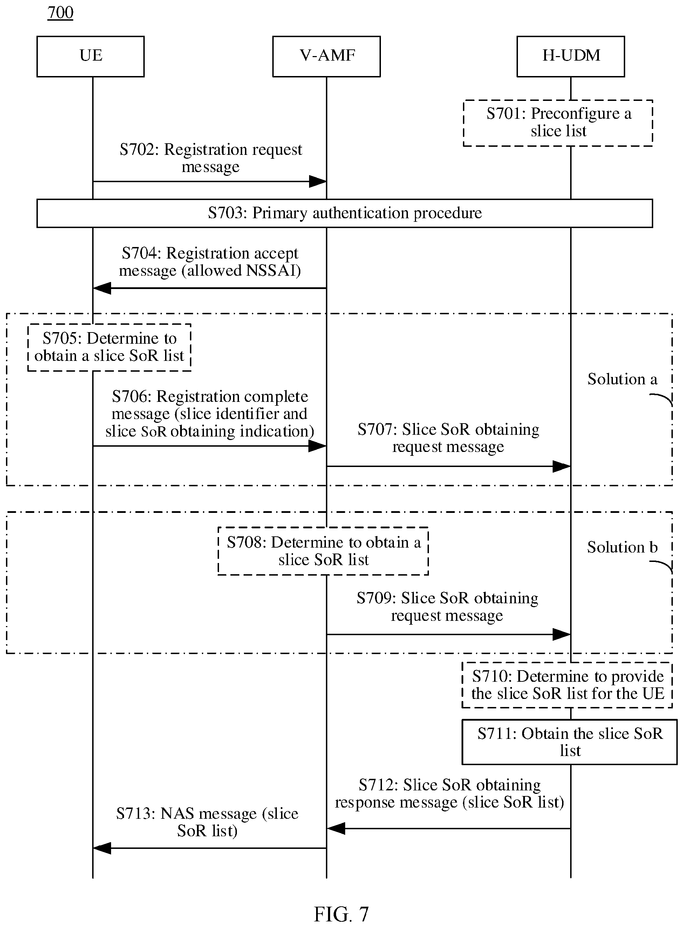

FIG. 7 is an example flowchart of a method 700 according to an embodiment of this application. It may be understood that the method 700 may be a possible implementation of the method 500. For example, S706 in the method 700 may correspond to S502 in the method 500, S709 in the method 700 may correspond to S503 in the method 500, S710 in the method 700 may correspond to S501 in the method 500, and S712 and S713 in the method 700 may respectively correspond to S504 and S505 in the method 500. In the method 600, an example in which the terminal device is UE, the visited mobility management network element is a V-AMF, and the data management network element is an H-UDM is used for description. In addition, an example in which the roaming public land mobile network is a PLMN and the steering of roaming information is SoR information is used for description. The following describes the method 700 by using an example with reference to steps in FIG. 7.

Optionally, in S701, the H-UDM preconfigures a slice list.

For example, the H-UDM may preconfigure the slice list for the UE, where the slice list includes an identifier of one or more slices. Optionally, identifiers of a plurality of slices may further correspond to different access modes.

In a first implementation, the slice list indicates a network slice corresponding to a slice SoR list sent to the UE, in other words, the slice list indicates a slice corresponding to a slice SoR list unauthorized to be obtained by the UE, to be specific, the H-UDM may send the slice SoR list corresponding to the slice in the slice list to the UE. In a second implementation, the slice list indicates a network slice corresponding to a slice SoR list not sent to the UE, or the slice list indicates a slice corresponding to a slice SoR list unauthorized to be obtained by the UE, to be specific, the H-UDM does not send the slice SoR list corresponding to the slice in the slice list to the UE. In other words, the slice list indicates a slice SoR list corresponding to which slice needs to be sent by the H-UDM, or the slice list indicates a slice SoR list corresponding to which slice does not need to be sent by the H-UDM.

Optionally, the H-UDM may further preconfigure a slice on which slice authentication needs to be performed. For the slice on which authentication needs to be performed, the H-UDM determines, before receiving an authentication success result, not to send slice SoR information corresponding to the slice. For example, a slice on which slice authentication needs to be performed may be put into a list, and the H-UDM does not send a slice SoR list for the slice in the list. After determining that authentication on a specific slice succeeds, the H-UDM removes the slice from the list, to represent that sending of a slice SoR list corresponding to the slice is allowed. In addition, sending of the slice SoR list may be allowed only after slice authentication is performed once for different access modes, and sending of the slice SoR list does not need to be allowed only after slice authentication is performed for a plurality of times for different access modes.

S702: The UE sends a registration request message to the V-AMF. Correspondingly, the V-AMF receives the registration request message from the UE.

Optionally, S703 is a primary authentication procedure.

S702 and S703 are similar to S301 and S302 in the method 300, and details are not described herein.

S704: The V-AMF sends a registration accept message to the UE. Correspondingly, the UE receives the registration accept message from the V-AMF.

For example, if the UE includes requested NSSAI (a list of slices requested to be accessed) in the registration request message, the V-AMF may determine, based on information such as the requested NSSAI and obtained subscription data of the UE, whether a slice authentication (NSSAA) procedure needs to be performed for the slices requested to be accessed. For a slice on which slice authentication does not need to be performed, the V-AMF does not trigger an NSSAA procedure for the slice on which slice authentication does not need to be performed. If the V-AMF accepts a request of the UE for accessing a specific slice (for example, whose identifier is S-NSSAI-1), the V-AMF includes allowed NSSAI in the registration accept message, where the information element (information element, IE) includes the identifier of the slice that is accepted (namely, the S-NSSAI-1). If the V-AMF does not accept a request of the UE for accessing a specific slice (for example, whose identifier is S-NSSAI-2), the V-AMF includes rejected NSSAI in the registration accept message, where the information element includes the identifier of the slice that is not accepted (namely, S-NSSAI-2).

Further, the UE or a network side may trigger a procedure of obtaining the slice SoR list. The following provides an example for description with reference to two possible implementations.

Solution a: The UE triggers the procedure of obtaining the slice SoR list.

S705: The UE determines to obtain the slice SoR list.

For example, if the registration accept message received by the UE includes the allowed NSSAI, where the allowed NSSAI is not empty, the UE determines to obtain a slice SoR list corresponding to a slice in the allowed NSSAI.

It may be understood that, if the UE further receives the rejected NSSAI, the UE determines not to obtain a slice SoR list corresponding to a slice in the rejected NSSAI. Alternatively, the UE may further determine a cause why a network slice in the rejected NSSAI list is rejected, and if the cause is authorization revocation, determine not to obtain a slice SoR list corresponding to the network slice.

Optionally, the UE may further determine, based on other information, whether to trigger the procedure of obtaining the slice SoR list. For a specific manner, refer to the description of the S607 part in the method 600. Details are not described herein.

S706: The UE sends a registration complete message to the V-AMF. Correspondingly, the V-AMF receives the registration complete message from the UE.

Optionally, the registration complete message includes a slice identifier list and/or slice SoR obtaining indication information. For details, refer to S608 in the method 600. A difference lies in that the slice identifier list and/or the slice SoR obtaining indication information in S608 are/is carried in the UCU complete message, but the slice identifier list and/or the slice SoR obtaining indication information in S706 are/is carried in the registration complete message. However, it may be understood that the slice identifier list and/or the slice SoR obtaining indication information may alternatively be carried in another message. This is not limited in this application.

S707: The V-AMF sends a slice SoR obtaining request message to the H-UDM. Correspondingly, the H-UDM receives the slice SoR obtaining request message from the V-AMF.

S707 is similar to S509 in the method 500. For brevity, details are not described herein.

Optionally, in S710, the H-UDM determines to send the slice SoR list to the UE.

For example, when the H-UDM preconfigures the slice list in S701, the H-UDM may determine, based on the preconfigured slice list, whether to send the slice SoR list to the UE.

Corresponding to the first implementation in S701, the H-UDM determines whether slice identifiers included by the V-AMF in the slice SoR obtaining request message belong to the slice identifier list. If none of identifiers in the slice identifiers belongs to the slice identifier list, the H-UDM determines not to send a slice SoR list to the UE; or if one or more identifiers in the slice identifiers belong to the slice identifier list, the H-UDM determines to send a slice SoR list corresponding to the one or more identifiers to the UE.

Corresponding to the second implementation in S701, the H-UDM determines whether slice identifiers included by the V-AMF in the slice SoR obtaining request message belong to the slice identifier list. If all identifiers in the slice identifiers belong to the slice identifier list, the H-UDM determines not to send a slice SoR list to the UE; or if one or more identifiers in the slice identifiers do not belong to the slice identifier list, the H-UDM determines to send a slice SoR list corresponding to the one or more identifiers to the UE.

Optionally, the H-UDM may determine, in another manner, whether to send a corresponding slice SoR list for the slice identifier carried in the request message. For example, as described in S615 in the method 600, the H-UDM may determine whether a slice SoR list corresponding to a slice in the request message is the same as a slice SoR list of another slice or is the same as a network-level SoR list. In this case, the H-UDM does not need to repeatedly send the slice-specific SoR list of the one or more slices. For a specific description, refer to S615. Details are not described herein.

S711: The H-UDM obtains the slice SoR list.

S712: The H-UDM sends a slice SoR obtaining response message to the V-AMF, where the slice SoR obtaining response message includes the slice SoR list. Correspondingly, the V-AMF receives the slice SoR obtaining response message from the H-UDM.

S713: The V-AMF sends a NAS message to the UE, where the NAS message includes the slice SoR list. Correspondingly, the UE receives the slice SoR list from the V-AMF.

S712 and S713 are similar to S516 and S517 in the method 500, and details are not described herein.

### Solution b:

S708: The V-AMF determines to obtain the slice SoR list.

For example, after the V-AMF determines the allowed NSSAI, if the allowed NSSAI is not empty, the V-AMF determines to obtain a slice SoR list corresponding to a network slice in the allowed NSSAI. Optionally, for S-NSSAI in the rejected NSSAI list, the UE further determines a cause why the S-NSSAI is rejected. If the cause why the S-NSSAI is rejected is not authorization revocation of the S-NSSAI, a SoR list corresponding to the slice may be requested.

Optionally, the V-AMF may further determine, based on other information, whether to trigger the procedure of obtaining the slice SoR list. For details, refer to the solution in which the UE determines to obtain the slice SoR list in S507 in the method 500. A difference lies in that S708 is performed by the V-AMF, and the other information may be information preconfigured by the V-AMF, or may be information obtained by the V-AMF from the H-UDM. This is not limited herein.

S709: The V-AMF sends a slice SoR obtaining request message to the H-UDM. Correspondingly, the H-UDM receives the slice SoR obtaining request message from the V-AMF.

S709 is similar to S509 in the method 500. For brevity, details are not described herein.

Further, the H-UDM determines whether to send the slice SoR list to the UE. When determining to send the slice SoR list to the UE, the H-UDM obtains the slice SoR list, and sends the slice SoR list to the UE through the V-AMF. For details, refer to descriptions of the S710 part to the S713 part in Solution a. Details are not described herein.

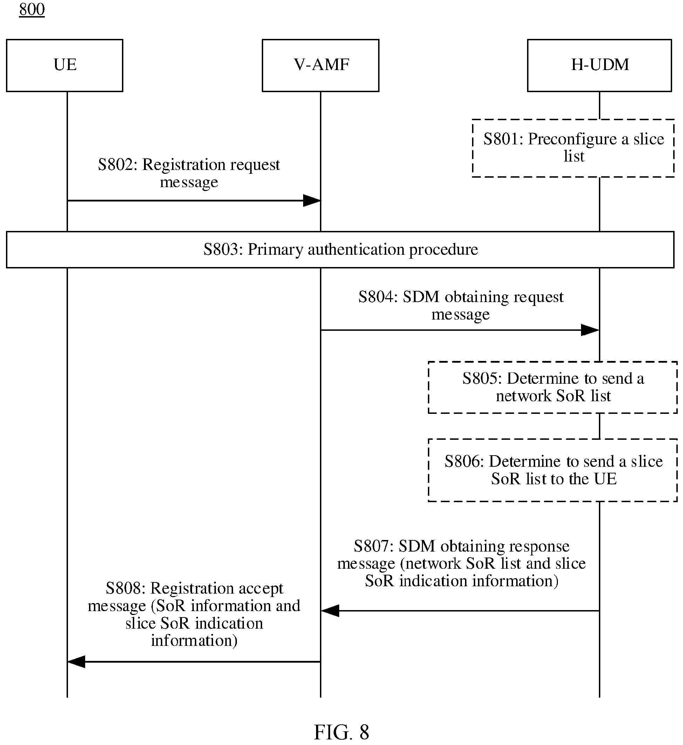

FIG. 8 is an example flowchart of a method 800 according to an embodiment of this application. It may be understood that the method 800 may be a possible implementation of the method 500. For example, S806 in the method 800 may correspond to S501 in the method 500, and S807 and S808 in the method 800 may correspond to S504 and S505 in the method 500. In the method 800, an example in which the terminal device is UE, the visited mobility management network element is a V-AMF, and the data management network element is an H-UDM is used for description. In addition, an example in which the roaming public land mobile network is a PLMN and the steering of roaming information is SoR information is used for description. The following describes the method 800 by using an example with reference to steps in FIG. 8.

Optionally, in S801, the H-UDM preconfigures a slice list.

It may be understood that S801 is similar to S601 in the method 600. For brevity, details are not described herein.

S802: The UE sends a registration request message to the V-AMF. Correspondingly, the V-AMF receives the registration request message from the UE.

S803 is an optional primary authentication (Primary Authentication) procedure.

S804: The V-AMF sends an SDM obtaining request message to the H-UDM. Correspondingly, the H-UDM receives the SDM obtaining request message from the V-AMF.

Optionally, in S805, the H-UDM determines to send a network SoR list.

S802 to S805 are similar to S301 to S304 in the method 300. A difference lies in that, in S804 in the method 700, the V-AMF may include the requested NSSAI, to be specific, a list of slices that the UE requests to access, in the SDM obtaining request message.

Optionally, in S806, the H-UDM determines to send the slice SoR list to the UE.

For example, the H-UDM determines, based on one or more of the requested NSSAI carried in the SDM obtaining request message, the slice list preconfigured by the H-UDM in S801, a network slice on which slice authentication needs to be performed, an authorized network slice, and a network slice on which slice authentication does not need to be performed, whether to send the slice SoR list to the UE.

In an example, the H-UDM determines, based on the requested NSSAI and the slice list preconfigured by the H-UDM in S801, whether to send the slice SoR list to the UE. For a specific manner, refer to the description of the S607 part. A difference lies in that, in S607, determining is performed based on the slice identifier carried in the slice SoR obtaining request message and the preconfigured slice list, but in S806, determining is performed based on the requested NSSAI carried in the slice SoR obtaining request message and the preconfigured slice list.

In another example, the H-UDM determines, based on the requested NSSAI, the network slice on which slice authentication needs to be performed, and the network slice on which slice authentication does not need to be performed, whether to send the slice SoR list to the UE. For example, when one or more slices in the requested NSSAI belong to the network slice on which slice authentication needs to be performed, the H-UDM determines not to send, to the UE, slice SoR lists corresponding to the slices on which slice authentication needs to be performed; or when one or more slices in the requested NSSAI belong to the network slice on which slice authentication does not need to be performed, the H-UDM determines to send, to the UE, slice SoR lists corresponding to the slices on which slice authentication does not need to be performed.

In still another example, the H-UDM determines, based on the requested NSSAI and the authorized network slice, whether to send the slice SoR list to the UE. For example, it is considered whether the H-UDM stores an authentication result of the UE for the network slice in the requested NSSAI. If an authentication result of a specific network slice is stored, and the authentication result is "success", the H-UDM determines that slice SoR corresponding to the network slice may be sent to the UE. If an authentication result of a specific network slice is not stored, or the authentication result of the network slice is stored but the authentication result is "failure", the H-UDM determines not to send slice SoR corresponding to the network slice to the UE, or the H-UDM determines not to temporarily send the slice SoR list corresponding to the slice to the UE, and determines to send the slice SoR of the slice to the UE only after the H-UDM receives the authentication result of the slice and the authentication result is "success". The authentication result of the network slice may be actively sent by another NF (for example, an NSSAAF or the V-AMF) to the H-UDM, or may be actively requested by the H-UDM from another NF. This is not limited in this application.

Optionally, the H-UDM may obtain the slice SoR when the H-UDM determines to send the slice SoR to the UE. A specific process is not limited.

S807: The H-UDM sends an SDM obtaining response message to the V-AMF. Correspondingly, the V-AMF receives the SDM obtaining response message from the H-UDM.

For example, the SDM obtaining response message includes the network SoR list. Optionally, the H-UDM may include the slice SoR in the SDM obtaining response message when the H-UDM determines to send the slice SoR to the UE. Alternatively, in another possible implementation, the H-UDM may include slice SoR indication information in the SDM obtaining response message, where the slice SoR indication information indicates the UE to actively obtain the slice SoR. In this implementation, the H-UDM may further generate a security parameter, for example, counter-UE, a timestamp (current time), or a one-time random number Nounce, include the security parameter in the SDM obtaining response message, and send the SDM obtaining response message to the UE, where the security parameter is used to protect, when the UE requests to obtain the slice SoR list, security of information carried in the message. For example, the security parameter is used to protect slice SoR-related information in the message in S508. For a specific method for using the security parameter, refer to S508.

Optionally, the SDM obtaining response message may further include a slice list that allows the UE to actively obtain the slice SoR, and the UE can only request to obtain slice SoR corresponding to a slice in the slice list.

Optionally, the SDM obtaining response message includes another type of slice SoR indication information indicating that slice SoR of one or more slices is the same as the network-level SoR list or is the same as a slice-specific SoR list of another slice. For descriptions of the indication information, refer to S615.

S808: The V-AMF sends a registration accept message to the UE. Correspondingly, the UE receives the registration accept message from the V-AMF.

For example, the registration accept message includes the network SoR list, and optionally, further includes at least one of the slice SoR list carried in the SDM obtaining response message, the slice SoR indication information, and the slice list that allows the UE to actively obtain the slice SoR.

If the UE receives the slice SoR indication information, the UE may request to obtain the slice SoR list from the H-UDM. A specific manner is not limited in this application.

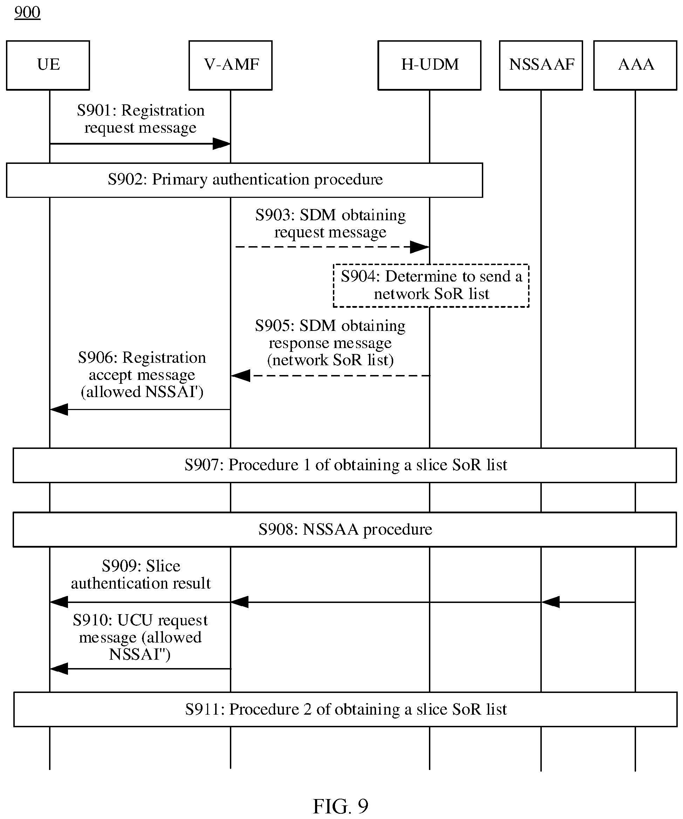

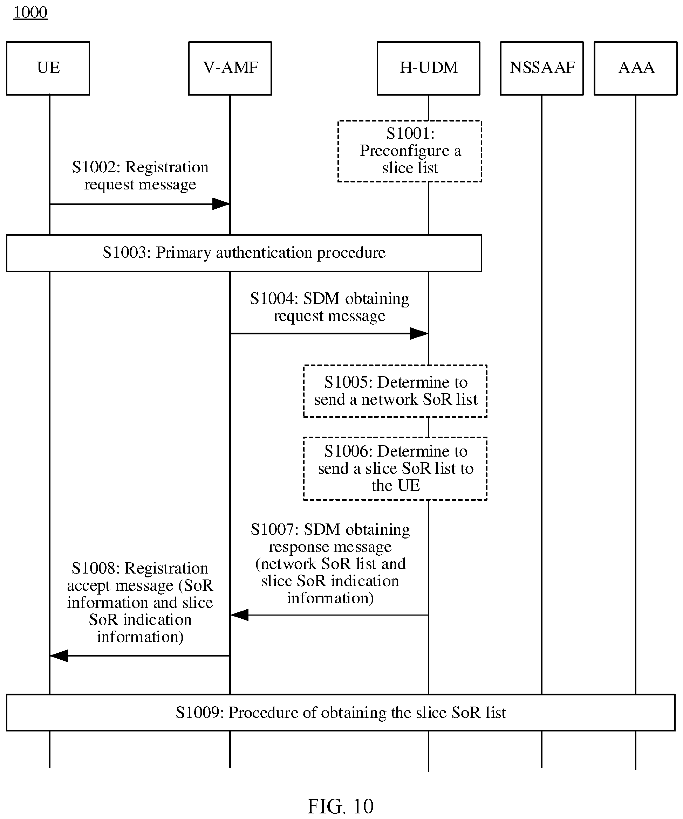

It may be understood that the method 200 and the method 600 to the method 800 may be independently implemented, or may be implemented in combination with each other. This is not limited in this application. The following describes two possible implementations with reference to FIG. 9 and FIG. 10.

FIG. 9 is a schematic flowchart of combining the method 600 and the method 700 for implementation. When a network slice requested by UE includes both a slice on which slice authentication needs to be performed and a slice on which slice authentication does not need to be performed, the method 600 and the method 700 may be combined for implementation. The following describes steps in the method 900 by using examples.

For S901 to S905, refer to S301 to S305 in the method 300, and for S906, refer to S704 in the method 700. It may be understood that allowed NSSAI' included in a registration accept message in S906 includes a slice that does not need to be authenticated. Optionally, the registration accept message may further include pending NSSAI (a slice on which slice authentication needs to be performed) and/or rejected NSSAI (a slice rejected to be accessed). This is not limited in this application. A procedure 1 of obtaining a slice SoR list shown in S907 may correspond to S705 to S713 in the method 700. Details are not described herein. For S908 to S910, refer to S604 to S606 in the method 600, and S909 may also be understood as a part of an NSSAA procedure in S908. This is not limited in this application. It may be understood that allowed NSSAI" included in S910 includes a slice that is successfully authenticated. A procedure 2 of obtaining a slice SoR list shown in S911 may correspond to S607 to S617 in the method 600. Details are not described herein.

In the foregoing solution, the UE first obtains a slice SoR list corresponding to a network slice that does not need to be authenticated, and then obtains a slice SoR list corresponding to a network slice that needs to be authenticated and is successfully authenticated. In another implementation, the UE may alternatively obtain, by using the same procedure, a slice SoR list corresponding to a network slice that does not need to be authenticated and a slice SoR list corresponding to a network slice that needs to be authenticated and is successfully authenticated. For example, after S906, the UE does not initiate the procedure 1 of obtaining the slice SoR list, but after S910, obtains, through the procedure 2 of obtaining the slice SoR list in S911, the slice SoR list corresponding to the network slice that does not need to be authenticated and the slice SoR list corresponding to the network slice that needs to be authenticated and is successfully authenticated. This is not limited in this application.

FIG. 10 is a schematic flowchart of combining the method 800 and the method 600 for implementation. For S1001 to S1008, refer to S801 to S808 in the method 800. UE may initiate, based on the slice SoR indication information included in S1008, a procedure of obtaining a slice SoR list in S1009. The procedure may correspond to the method Solution 1, to be specific, S607 to S609 and S615 to S617. A specific process is not described herein. Alternatively, S1009 may be initiated by a V-AMF or an H-UDM, respectively corresponding to Solution 2 (to be specific, S610, S611, and S615 to S617) or Solution 3 (to be specific, S612 to S614 and S615 to S617). A specific process is not described herein.

Corresponding to the methods provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that technical features described in the foregoing method embodiments are also applicable to the following apparatus embodiments. Therefore, for content that is not described in detail, refer to the foregoing method embodiments. For brevity, details are not described herein.

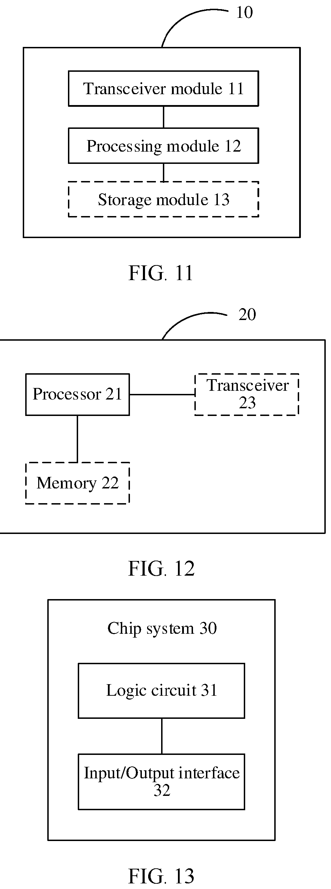

FIG. 11 is a block diagram of a communication apparatus 10 according to an embodiment of this application. The apparatus 10 includes a transceiver module 11 and a processing module 12. The transceiver module 11 may implement a corresponding communication function, and the processing module 12 is configured to perform data processing. Alternatively, the transceiver module 11 is configured to perform receiving and sending related operations, and the processing module 12 is configured to perform operations other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, to enable the apparatus to implement an action of the device or the network element in the foregoing method embodiments.

In a first design, the apparatus 10 may correspond to the terminal device (for example, the terminal device in the method 500, or the UE in the method 600 to the method 1000) in the foregoing method embodiments, or may be a component (for example, a chip) of the terminal device.

The apparatus 10 may implement corresponding steps or procedures performed by the terminal device in the foregoing method embodiments. The transceiver module 11 may be configured to perform receiving and sending related operations of the terminal device in the foregoing method embodiments. The processing module 12 may be configured to perform a processing related operation of the terminal device in the foregoing method embodiments.

In a possible implementation, the transceiver module 11 is configured to receive steering of roaming information from a visited mobility management network element, where the steering of roaming information includes a roaming public land mobile network priority list corresponding to one or more network slices, the one or more network slices are a network slice authorized to be used by the apparatus, and the list is used to select a roaming public land mobile network corresponding to the one or more network slices; and the processing module 12 is configured to store the steering of roaming information.

In a second design, the apparatus 10 may correspond to the data management network element (for example, the data management network element in the method 500 or the H-UDM in the method 600 to the method 1000) in the foregoing method embodiments, or may be a component (for example, a chip) of the data management network element.

The apparatus 10 may implement corresponding steps or procedures performed by the data management network element in the foregoing method embodiments. The transceiver module 11 may be configured to perform receiving and sending related operations of the data management network element in the foregoing method embodiments. The processing module 12 may be configured to perform a processing related operation of the data management network element in the foregoing method embodiments.

In a possible implementation, the processing module 12 is configured to determine that slice-specific steering of roaming information needs to be sent to a terminal device; and the transceiver module 11 is configured to send the steering of roaming information to the terminal device, where the steering of roaming information includes a roaming public land mobile network priority list corresponding to one or more network slices, the one or more network slices are a network slice authorized to be used by the terminal device, and the list is used to select a roaming public land mobile network corresponding to the one or more network slices.

In a third design, the apparatus 10 may correspond to the visited mobility management network element (for example, the visited mobility management network element in the method 500, or the V-AMF in the method 600 to the method 1000) in the foregoing method embodiments, or may be a component (for example, a chip) of the visited mobility management network element.

The apparatus 10 may implement corresponding steps or procedures performed by the visited mobility management network element in the foregoing method embodiments. The transceiver module 11 may be configured to perform receiving and sending related operations of the visited mobility management network element in the foregoing method embodiments. The processing module 12 may be configured to perform a processing related operation of the visited mobility management network element in the foregoing method embodiments.

In a possible implementation, the transceiver module 11 is configured to: send a request message to a data management network element, where the request message is used to request to obtain steering of roaming information, the request message includes an identifier of one or more network slices, and the one or more network slices are a network slice authorized to be used by a terminal device; receive a response message from the data management network element, where the response message includes the steering of roaming information, the steering of roaming information includes a roaming public land mobile network priority list corresponding to the one or more network slices, and the list is used to select a roaming public land mobile network corresponding to the one or more network slices; and send the steering of roaming information to the terminal device.

It should be understood that a specific process in which the modules perform the foregoing corresponding steps are already described in detail in the foregoing method embodiments. For brevity, details are not described herein.

It should also be understood that the apparatus 10 herein is presented in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a combinational logic circuit, and/or another suitable component that supports the described functions. In an optional example, a person skilled in the art may understand that the apparatus 10 may be specifically the terminal device in the foregoing embodiments, and may be configured to perform the procedures and/or steps corresponding to the terminal device in the foregoing method embodiments; the apparatus 10 may be specifically the data management network element in the foregoing embodiments, and may be configured to perform the procedures and/or steps corresponding to the data management network element in the foregoing method embodiments; or the apparatus 10 may be specifically the mobility management network element in the foregoing embodiments, and may be configured to perform the procedures and/or steps corresponding to the mobility management network element in the foregoing method embodiments. To avoid repetition, details are not described herein.

The apparatus 10 in each of the foregoing solutions has a function of implementing corresponding steps performed by the device (for example, a terminal device, a data management network element, or a visited mobility management network element) in the foregoing methods. The function may be implemented by hardware, or may be implemented by hardware executing corresponding software. The hardware or software includes one or more modules corresponding to the foregoing function. For example, the transceiver module may be replaced with a transceiver (for example, a sending unit in the transceiver module may be replaced with a transmitter, and a receiving unit in the transceiver module may be replaced with a receiver), and another unit such as the processing module may be replaced with a processor, to respectively perform sending and receiving operations and a related processing operation in the method embodiments.

In addition, the transceiver module 11 may alternatively be a transceiver circuit (for example, may include a receiver circuit and a transmitter circuit), and the processing module may be a processing circuit.

FIG. 12 is a diagram of another communication apparatus 20 according to an embodiment of this application. The apparatus 20 includes a processor 21. The processor 21 is configured to execute a computer program or instructions stored in a memory 22, or read data/signaling stored in the memory 22, to perform the method in the foregoing method embodiments. Optionally, there are one or more processors 21.

Optionally, as shown in FIG. 12, the apparatus 20 further includes the memory 22, and the memory 22 is configured to store the computer program or the instructions and/or data. The memory 22 and the processor 21 may be integrated together, or may be disposed separately. Optionally, there are one or more memories 22.

Optionally, as shown in FIG. 12, the apparatus 20 further includes a transceiver 23, and the transceiver 23 is configured to receive and/or send a signal. For example, the processor 21 is configured to control the transceiver 23 to receive and/or send the signal.

In a solution, the apparatus 20 is configured to implement operations performed by the terminal device in the foregoing method embodiments.

In another solution, the apparatus 20 is configured to implement operations performed by the data management network element in the foregoing method embodiments.

In still another solution, the apparatus 20 is configured to implement operations performed by the visited mobility management network element in the foregoing method embodiments.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the storage (a storage module) may be integrated into the processor.

It should be further noted that the storage described herein is intended to include, but is not limited to, these and any other appropriate type of storage.

FIG. 13 is a diagram of a chip system 30 according to an embodiment of this application. The chip system 30 (or may be referred to as a processing system) includes a logic circuit 31 and an input/output interface (input/output interface) 32.

The logic circuit 31 may be a processing circuit in the chip system 30. The logic circuit 31 may be coupled to and connected to a storage unit, and invoke instructions in the storage unit, to enable the chip system 30 to implement the methods and functions in embodiments of this application. The input/output interface 32 may be an input/output circuit in the chip system 30, and outputs information processed by the chip system 30, or inputs to-be-processed data or signaling information into the chip system 30 for processing.

In another solution, the chip system 30 is configured to implement operations performed by the terminal device (for example, the terminal device in FIG. 5 or the UE in FIG. 6 to FIG. 10) in the foregoing method embodiments.

For example, the logic circuit 31 is configured to implement processing related operations performed by the terminal device in the foregoing method embodiments, for example, a processing related operation performed by the terminal device in the embodiment shown in FIG. 5 or a processing related operation performed by the UE in the embodiment shown in any one of FIG. 6 to FIG. 10. The input/output interface 32 is configured to implement sending and/or receiving related operations performed by the terminal device in the foregoing method embodiments, for example, a sending and/or receiving related operation performed by the terminal device in the embodiment shown in FIG. 5 or a sending and/or receiving related operation performed by the UE in the embodiment shown in any one of FIG. 6 to FIG. 10.

In another solution, the chip system 30 is configured to implement operations performed by the data management network element (for example, the data management network element in FIG. 5 or the H-UDM in FIG. 6 to FIG. 10) in the foregoing method embodiments.

For example, the logic circuit 31 is configured to implement processing related operations performed by the data management network element in the foregoing method embodiments, for example, a processing related operation performed by the data management network element in the embodiment shown in FIG. 5 or a processing related operation performed by the H-UDM in the embodiment shown in any one of FIG. 6 to FIG. 10. The input/output interface 32 is configured to implement sending and/or receiving related operations performed by the data management network element in the foregoing method embodiments, for example, a sending and/or receiving related operation performed by the data management network element in the embodiment shown in FIG. 5 or a sending and/or receiving related operation performed by the H-UDM in the embodiment shown in any one of FIG. 6 to FIG. 10.

In another solution, the chip system 30 is configured to implement operations performed by the visited mobility management network element (for example, the visited mobility management network element in FIG. 5 or the V-AMF in FIG. 6 to FIG. 10) in the foregoing method embodiments.

For example, the logic circuit 31 is configured to implement processing related operations performed by the visited mobility management network element in the foregoing method embodiments, for example, a processing related operation performed by the visited mobility management network element in the embodiment shown in FIG. 5 or a processing related operation performed by the V-AMF in the embodiment shown in any one of FIG. 6 to FIG. 10. The input/output interface 32 is configured to implement sending and/or receiving related operations performed by the visited mobility management network element in the foregoing method embodiments, for example, a sending and/or receiving related operation performed by the visited mobility management network element in the embodiment shown in FIG. 5 or a sending and/or receiving related operation performed by the V-AMF in the embodiment shown in any one of FIG. 6 to FIG. 10.

An embodiment of this application further provides a computer-readable storage medium. The computer-readable storage medium stores computer instructions for implementing the method performed by the device in the foregoing method embodiments.

For example, when a computer program is executed by a computer, the computer is enabled to implement the method performed by the mobility management network element in the foregoing method embodiments.

For another example, when a computer program is executed by a computer, the computer is enabled to implement the method performed by the terminal device in the foregoing method embodiments.

An embodiment of this application further provides a computer program product, including instructions. When the instructions are executed by a computer, the method performed by the device (for example, a terminal device, a data management network element, or a visited mobility management network element) in the foregoing method embodiments is implemented.

An embodiment of this application further provides a communication system, including the foregoing data management network element. Optionally, the foregoing visited mobility management network element is further included. Optionally, the foregoing terminal device is further included.

For explanations and beneficial effects of related content of any one of the apparatuses provided above, refer to the corresponding method embodiments provided above. Details are not described herein.

In the several embodiments provided in this application, it should be understood that the disclosed apparatus and method may be implemented in other manners. For example, the described apparatus embodiments are merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. For example, the usable medium includes but is not limited to any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a terminal device, steering of roaming information from a visited mobility management network element, wherein the steering of roaming information comprises a roaming public land mobile network priority list corresponding to one or more network slices, the one or more network slices are a network slice authorized to be used by the terminal device, and the list is used to select a roaming public land mobile network corresponding to the one or more network slices; and
storing, by the terminal device, the steering of roaming information.

2. The method according to claim 1, wherein the method further comprises:
sending, by the terminal device, a registration request message to the visited mobility management network element; and
receiving, by the terminal device, a registration accept message from the visited mobility management network element, wherein the registration accept message comprises an allowed network slice, and the network slice authorized to be used by the terminal device is the allowed network slice.

3. The method according to claim 1, wherein before the receiving, by a terminal device, steering of roaming information from a visited mobility management network element, the method further comprises:
sending, by the terminal device, a registration request message to the visited mobility management network element;
receiving, by the terminal device, a registration accept message from the visited mobility management network element;
performing, by the terminal device, slice authentication on one or more candidate network slices to be used; and
receiving, by the terminal device, a slice authentication result from the visited mobility management network element, wherein the slice authentication result indicates whether the one or more candidate network slices to be used are successfully authenticated, and the network slice authorized to be used by the terminal device is a successfully authenticated network slice in the one or more candidate network slices to be used.

4. The method according to claim 1, wherein before the receiving, by a terminal device, steering of roaming information from a visited mobility management network element, the method further comprises:
sending, by the terminal device, a registration request message to the visited mobility management network element;
receiving, by the terminal device, a registration accept message from the visited mobility management network element, wherein the registration accept message comprises an identifier of an allowed network slice;
performing, by the terminal device, slice authentication on one or more candidate network slices to be used; and
receiving, by the terminal device, a slice authentication result from the visited mobility management network element, wherein the slice authentication result indicates whether the one or more candidate network slices to be used are successfully authenticated, and the network slice authorized to be used by the terminal device is a union set of a successfully authenticated network slice in the one or more candidate network slices to be used and the allowed network slice.

5. The method according to any one of claims 2 to 4, wherein the method further comprises:
sending, by the terminal device, a request message to the visited mobility management network element, wherein the request message is used to request to obtain the steering of roaming information, and the request message comprises an identifier of the network slice authorized to be used by the terminal device.

6. The method according to claim 5, wherein the request message further comprises indication information indicating to request to obtain slice-specific steering of roaming information.

7. The method according to claim 5 or 6, wherein the request message is a message on which security protection is performed by the terminal device, and the security protection comprises integrity protection and/or encryption protection performed on the identifier of the network slice authorized to be used by the terminal device.

8. The method according to claim 7, wherein the request message further comprises a security parameter, and the security parameter is an input parameter used when the terminal device performs integrity protection and/or encryption protection on the identifier of the network slice authorized to be used by the terminal device.

9. The method according to claim 7, wherein the registration accept message further comprises a security parameter, and the security parameter is an input parameter used when the terminal device performs integrity protection and/or encryption protection on the identifier of the network slice authorized to be used by the terminal device.

10. The method according to any one of claims 5 to 9, wherein the sending, by the terminal device, a request message to the visited mobility management network element comprises:
sending, by the terminal device, the request message to a data management network element when one or more of the following conditions are met:
the terminal device is located in a preset roaming network;
the terminal device accesses a network in a preset access mode; or
the terminal device receives indication information that is from the visited mobility management network element and that indicates the terminal device to obtain the slice-specific steering of roaming information.

11. A communication method, comprising:
determining, by a data management network element, that slice-specific steering of roaming information needs to be sent to a terminal device; and
sending, by the data management network element, the steering of roaming information to the terminal device, wherein the steering of roaming information comprises a roaming public land mobile network priority list corresponding to one or more network slices, the one or more network slices are a network slice authorized to be used by the terminal device, and the list is used to select a roaming public land mobile network corresponding to the one or more network slices.

12. The method according to claim 11, wherein the determining, by a data management network element, that slice-specific steering of roaming information needs to be sent to a terminal device comprises:
receiving, by the data management network element, a slice authentication result associated with the terminal device from a network slice authentication and authorization function network element, wherein the slice authentication result indicates whether slice authentication on a candidate network slice to be used by the terminal device succeeds; and
determining, by the data management network element in response to the slice authentication result, that the steering of roaming information needs to be sent to the terminal device, wherein the one or more network slices are a network slice on which slice authentication succeeds in the candidate network slice to be used by the terminal device.

13. The method according to claim 11, wherein the steering of roaming information comprises first steering of roaming information, and the determining, by a data management network element, that slice-specific steering of roaming information needs to be sent to a terminal device comprises:
receiving, by the data management network element, a first slice authentication result associated with the terminal device from a network slice authentication and authorization function network element, wherein the first slice authentication result indicates that slice authentication on a first network slice succeeds; and
determining, by the data management network element in response to the first slice authentication result, to send the first steering of roaming information to the terminal device, wherein the first steering of roaming information comprises a roaming public land mobile network priority list corresponding to the first network slice.

14. The method according to claim 12 or 13, wherein the method further comprises:
sending, by the data management network element, a subscription message to the network slice authentication and authorization function network element, wherein the subscription message is used to subscribe to the slice authentication result of the candidate network slice to be used by the terminal device; or
sending, by the data management network element, an authentication result obtaining request message to the network slice authentication and authorization function network element, wherein the authentication result obtaining request message is used to request to obtain the slice authentication result of the candidate network slice to be used by the terminal device.

15. The method according to claim 11, wherein the determining, by a data management network element, that slice-specific steering of roaming information needs to be sent to a terminal device comprises:
receiving, by the data management network element, a request message from the terminal device or a visited mobility management network element serving the terminal device, wherein the request message is used to request to obtain the steering of roaming information, and the request message comprises an identifier of the network slice authorized to be used by the terminal device; and
determining, by the data management network element in response to the request message, to send, to the terminal device, the steering of roaming information corresponding to the network slice authorized to be used by the terminal device.

16. The method according to any one of claims 11 to 15, wherein the determining, by a data management network element, that slice-specific steering of roaming information needs to be sent to a terminal device comprises:
determining, by the data management network element when the identifier of the one or more network slices belongs to a slice list preconfigured on the data management network element, that the steering of roaming information corresponding to the one or more network slices needs to be sent to the terminal device.

17. The method according to claim 15, wherein before the receiving, by the data management network element, a request message from the terminal device, the method further comprises:
sending, by the data management network element, indication information to the terminal device, wherein the indication information indicates the terminal device to obtain the slice-specific steering of roaming information.

18. The method according to claim 17, wherein the method further comprises:
sending, by the data management network element, a security parameter to the terminal device, wherein the security parameter is an input parameter used when the terminal device performs integrity protection and/or encryption protection on the identifier of the network slice authorized to be used by the terminal device.

19. A communication method, comprising:
sending, by a visited mobility management network element, a request message to a data management network element, wherein the request message is used to request to obtain steering of roaming information, the request message comprises an identifier of one or more network slices, and the one or more network slices are a network slice authorized to be used by a terminal device;
receiving, by the visited mobility management network element, a response message from the data management network element, wherein the response message comprises the steering of roaming information, the steering of roaming information comprises a roaming public land mobile network priority list corresponding to the one or more network slices, and the list is used to select a roaming public land mobile network corresponding to the one or more network slices; and
sending, by the visited mobility management network element, the steering of roaming information to the terminal device.

20. The method according to claim 19, wherein the method further comprises:
receiving, by the visited mobility management network element, a registration request message from the terminal device; and
sending, by the visited mobility management network element, a registration accept message to the terminal device in response to the registration request message, wherein the registration accept message comprises an allowed network slice, and the network slice authorized to be used by the terminal device is the allowed network slice.

21. The method according to claim 19, wherein before the sending, by the visited mobility management network element, the steering of roaming information to the terminal device, the method further comprises:
receiving, by the visited mobility management network element, a registration request message from the terminal device;
sending, by the visited mobility management network element, a registration accept message to the terminal device in response to the registration request message;
triggering, by the visited mobility management network element, the terminal device to perform slice authentication on one or more candidate network slices to be used;
receiving, by the visited mobility management network element, a slice authentication result from a network slice authentication and authorization function network element, wherein the slice authentication result indicates whether the one or more candidate network slices to be used are successfully authenticated, and the network slice authorized to be used by the terminal device is a successfully authenticated network slice in the one or more candidate network slices to be used; and
sending, by the visited mobility management network element, the slice authentication result to the terminal device.

22. The method according to claim 19, wherein before the sending, by the visited mobility management network element, the steering of roaming information to the terminal device, the method further comprises:
receiving, by the visited mobility management network element, a registration request message from the terminal device;
sending, by the visited mobility management network element, a registration accept message to the terminal device in response to the registration request message, wherein the registration accept message comprises an identifier of an allowed network slice;
triggering, by the visited mobility management network element, the terminal device to perform slice authentication on one or more candidate network slices to be used;
receiving, by the visited mobility management network element, a slice authentication result from a network slice authentication and authorization function network element, wherein the slice authentication result indicates whether the one or more candidate network slices to be used are successfully authenticated, and the network slice authorized to be used by the terminal device is a union set of a successfully authenticated network slice in the one or more candidate network slices to be used and the allowed network slice; and
sending, by the visited mobility management network element, the slice authentication result to the terminal device.

23. The method according to any one of claims 19 to 22, wherein the request message further comprises indication information indicating to request to obtain slice-specific steering of roaming information.

24. The method according to any one of claims 19 to 23, wherein the sending, by a visited mobility management network element, a request message to a data management network element comprises:
sending, by the visited mobility management network element, the request message to the data management network element when one or more of the following conditions are met:
the terminal device is located in a preset roaming network; or
the terminal device accesses a network in a preset access mode.

25. A communication apparatus, wherein the apparatus comprises a module configured to perform the method according to any one of claims 1 to 10, a module configured to perform the method according to any one of claims 11 to 18, or a module configured to perform the method according to any one of claims 19 to 24.

26. A communication apparatus, comprising:
a processor, configured to execute a computer program stored in a memory, to enable the apparatus to perform the method according to any one of claims 1 to 10, enable the apparatus to perform the method according to any one of claims 11 to 18, or enable the apparatus to perform the method according to any one of claims 19 to 24.

27. A computer program product, wherein the computer program product comprises instructions used to perform the method according to any one of claims 1 to 10, the computer program product comprises instructions used to perform the method according to any one of claims 11 to 18, or the computer program product comprises instructions used to perform the method according to any one of claims 19 to 24.

28. A computer-readable storage medium, wherein the computer-readable storage medium stores a computer program; and when the computer program is run on a computer, the computer is enabled to perform the method according to any one of claims 1 to 10, the computer is enabled to perform the method according to any one of claims 11 to 18, or the computer is enabled to perform the method according to any one of claims 19 to 24.

29. A communication system, comprising a data management network element and a visited session management network element, wherein the data management network element is configured to perform the method according to any one of claims 11 to 18, and the visited session management network element is configured to perform the method according to any one of claims 19 to 24.
